(19) Europäisches Patentamt
European Patent Office
Office européen des brevets

(11) **EP 4 564 948 A1**

(12) **EUROPEAN PATENT APPLICATION**
published in accordance with Art. 153(4) EPC

(43) Date of publication:
**04.06.2025 Bulletin 2025/23**

(21) Application number: **23851493.9**

(22) Date of filing: **30.06.2023**

(51) International Patent Classification (IPC):
***H04W 64/00*** (2009.01)

(52) Cooperative Patent Classification (CPC):
**H04W 24/02; H04W 24/08; H04W 64/00**

(86) International application number:
**PCT/CN2023/105157**

(87) International publication number:
**WO 2024/032266 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.08.2022 CN 202210948292**

(71) Applicant: **Huawei Technologies Co., Ltd.
Shenzhen, Guangdong 518129 (CN)**

(72) Inventors:
• **ZHANG, Li
Shenzhen, Guangdong 518129 (CN)**
• **HUANG, Su
Shenzhen, Guangdong 518129 (CN)**
• **XIN, Rui
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS**

(57) A communication method and apparatus are provided. The method includes: A terminal device determines time for measuring each of Q PRS frequency layers in a mode 2. The terminal device determines second measurement time based on a maximum value of the time for measuring each of the Q PRS frequency layers, where Q is a positive integer. According to the method, the terminal device may determine the second measurement time based on the maximum value of the time for measuring each of the Q PRS frequency layers, so that total measurement time of the terminal device for measuring the Q PRS frequency layers in the mode 2 can be reduced.

100

FIG. 1

EP 4 564 948 A1

**Description**

This application claims priority to Chinese Patent Application No. 202210948292.6, filed with the China National Intellectual Property Administration on August 9, 2022 and entitled "COMMUNICATION METHOD AND APPARATUS", which is incorporated herein by reference in its entirety.

**TECHNICAL FIELD**

This application relates to the communication field, and more specifically, to a communication method and apparatus.

**BACKGROUND**

In the R17 standard, the following is defined: A terminal device may measure a positioning reference signal (positioning reference signal, PRS) frequency layer based on a mode 2 out of a measurement gap (measurement gap, MG), for example, in a positioning reference signal processing window (positioning reference signal processing window, PPW). The mode 2 is associated with a capability {N2, T2} reported by the terminal device to an LMF, where N2 is a duration capability of the terminal device for measuring the PRS frequency layer, and T2 is a processing time capability of the terminal device for measuring the PRS frequency layer. T2 can be located only within a length of the PPW. In this case, data receiving of the terminal device is greatly affected, but processing time of the terminal device for measuring the PRS frequency layer is reduced.

In a conventional technology, when there is more than one PRS frequency layer, how the terminal device determines total measurement time for measuring at least one PRS frequency layer based on the mode 2 is not described in a related solution currently.

**SUMMARY**

This application provides a communication method and apparatus, so that a terminal device can determine, when there is more than one PRS frequency layer, total measurement time for measuring at least one PRS frequency layer based on a mode 2.

According to a first aspect, this application provides a communication method. The method may be performed by a terminal device or a chip used in a terminal device. The following uses an example in which the method is performed by the terminal device for description.

The method may include: The terminal device determines time for measuring each of Q PRS frequency layers in a mode 2. The terminal device determines second measurement time based on a maximum value of the time for measuring each of the Q PRS frequency layers, where Q is a positive integer.

Based on the foregoing technical solution, the terminal device may determine the time for measuring each of the Q PRS frequency layers in the mode 2, and determine the second measurement time based on the maximum value of the time for measuring each of the Q PRS frequency layers. According to the method, total measurement time of the terminal device for measuring the Q PRS frequency layers in the mode 2 can be reduced.

It should be understood that, that the terminal device determines second measurement time based on a maximum value of the time for measuring each of the Q PRS frequency layers may be understood as that total time of the terminal device for measuring the Q PRS frequency layers does not exceed the second measurement time.

With reference to the first aspect, in some implementations of the first aspect, the method further includes: The terminal device determines time for measuring each of P PRS frequency layers in a mode 1. The terminal device determines first measurement time based on a sum of time for measuring all of the P PRS frequency layers, where P is a positive integer.

It should be understood that, that the terminal device determines first measurement time based on a sum of time for measuring all of the P PRS frequency layers may be understood as that total time of the terminal device for measuring the P PRS frequency layers does not exceed the first measurement time.

With reference to the first aspect, in some implementations of the first aspect, the method further includes: The terminal device determines third measurement time based on the first measurement time and the second measurement time, where the third measurement time is time for measuring P+Q PRS frequency layers.

It should be understood that, that the terminal device determines third measurement time based on the first measurement time and the second measurement time may be understood as that a sum of the total time of the terminal device for measuring the Q PRS frequency layers and the total time of the terminal device for measuring the P PRS frequency layers does not exceed the third measurement time.

With reference to the first aspect, in some implementations of the first aspect, that the terminal device determines third measurement time based on the first measurement time and the second measurement time includes: The terminal device determines the third measurement time based on the first measurement time, the second measurement time, and a first margin, where the third measurement time is a sum of the first measurement time, the second measurement time, and the first margin.

With reference to the first aspect, in some implementations of the first aspect, time for measuring a second PRS frequency layer in the Q PRS frequency layers is determined based on first time and/or second time, the first time is sampling time for measuring the second PRS frequency layer, and the second time is measurement time for measuring a last sampling point of the second PRS frequency layer.

With reference to the first aspect, in some implementations of the first aspect, the second time includes sampling time and processing time.

With reference to the first aspect, in some implementations of the first aspect, the first time is duration of a PRS resource, the duration of the PRS resource is in a first window, a length of the first window is a difference between a length of a second measurement time window of the second PRS frequency layer and T2, and a start position of the first window is a start point of the length of the second measurement time window, where T2 is a processing time capability of the terminal device for measuring the second PRS frequency layer.

With reference to the first aspect, in some implementations of the first aspect, the first time is duration of a PRS resource, the duration of the PRS resource is less than or equal to N2, the duration of the PRS resource is in a first window, a length of the first window is a difference between a length of a second measurement time window of the second PRS frequency layer and T2, and a start position of the first window is a start point of the length of the second measurement time window, where N2 is a duration capability of the terminal device for measuring the second PRS frequency layer, and T2 is a processing time capability of the terminal device for measuring the second PRS frequency layer.

With reference to the first aspect, in some implementations of the first aspect, the first time is a smallest value between duration of a PRS resource and N2, the duration of the PRS resource is in a first window, a length of the first window is a difference between a length of a second measurement time window of the second PRS frequency layer and T2, and a start position of the first window is a start point of the length of the second measurement time window, where N2 is a duration capability of the terminal device for measuring the second PRS frequency layer, and T2 is a processing time capability of the terminal device for measuring the second PRS frequency layer.

With reference to the first aspect, in some implementations of the first aspect, when all PRS resources of the second PRS frequency layer are in the second measurement time window of the second PRS frequency layer, the second time is the length of the second measurement time window of the second PRS frequency layer.

With reference to the first aspect, in some implementations of the first aspect, when a PRS resource of the second PRS frequency layer is not in the second measurement time window of the second PRS frequency layer, the second time is an available periodicity of the second PRS frequency layer.

With reference to the first aspect, in some implementations of the first aspect, the method further includes: The terminal device reports a second capability to a location management function LMF, where the second capability is associated with the second PRS frequency layer. The terminal device determines, based on the second capability, that a measurement mode of the second PRS frequency layer is the mode 2.

Based on the foregoing technical solution, the terminal device may determine, based on the second capability reported to the LMF, that the measurement mode of the second PRS frequency layer is the mode 2, so that measurement behavior of the terminal device can be determined.

With reference to the first aspect, in some implementations of the first aspect, the second capability is {N2, T2}, where N2 is the duration capability of the terminal device for measuring the second PRS frequency layer, and T2 is the processing time capability of the terminal device for measuring the second PRS frequency layer.

With reference to the first aspect, in some implementations of the first aspect, the second capability includes {N, T} and {N2, T2}, N and N2 are duration capabilities of the terminal device for measuring the second PRS frequency layer, and T and T2 are processing time capabilities of the terminal device for measuring the second PRS frequency layer. That the terminal device determines, based on the second capability, that a measurement mode of the second PRS frequency layer is the mode 2 includes: The terminal device receives first indication information from the LMF, where the first indication information indicates that the measurement mode of the second PRS frequency layer is the mode 2.

With reference to the first aspect, in some implementations of the first aspect, the second capability includes {N, T} and {N2, T2}, N and N2 are duration capabilities of the terminal device for measuring the second PRS frequency layer, and T and T2 are processing time capabilities of the terminal device for measuring the second PRS frequency layer. That the terminal device determines, based on the second capability, that a measurement mode of the second PRS frequency layer is the mode 2 includes: The terminal device receives second indication information from a network device, where the second indication information indicates the length of the second measurement time window of the second PRS frequency layer. The terminal device determines, based on a case that the length of the second measurement time window is greater than or equal to a first threshold, that the measurement mode of the second PRS frequency layer is the mode 2.

With reference to the first aspect, in some implementations of the first aspect, the method further includes: The terminal device reports a first capability to a location management function LMF, where the first capability is associated with a first PRS frequency layer. The terminal device determines, based on the first capability, that a measurement mode of the first PRS frequency layer is a mode 1.

Based on the foregoing technical solution, the terminal device may determine, based on the first capability reported to the LMF, that the measurement mode of the first PRS frequency layer is the mode 1, so that measurement behavior of the terminal device can be determined.

With reference to the first aspect, in some implementations of the first aspect, the first capability is {N, T}, where N is a duration capability of the terminal device for measuring the first PRS frequency layer, and T is a processing time capability of the terminal device for measuring the first PRS frequency layer.

With reference to the first aspect, in some implementations of the first aspect, the first capability includes {N, T} and {N2, T2}, N and N2 are duration capabilities of the terminal device for measuring the first PRS frequency layer, and T and T2 are processing time capabilities of the terminal device for measuring the first PRS frequency layer. That the terminal device determines, based on the first capability, that a measurement mode of the first PRS frequency layer is a mode 1 includes: The terminal device receives first indication information from the LMF, where the first indication information indicates that the measurement mode of the first PRS frequency layer is the mode 1.

With reference to the first aspect, in some implementations of the first aspect, the first capability includes {N, T} and {N2, T2}, N and N2 are duration capabilities of the terminal device for measuring the first PRS frequency layer, and T and T2 are processing time capabilities of the terminal device for measuring the first PRS frequency layer. That the terminal device determines, based on the first capability, that a measurement mode of the first PRS frequency layer is a mode 1 includes: The terminal device receives second indication information from a network device, where the second indication information indicates a length of a first measurement time window of the first PRS frequency layer. The terminal device determines, based on a case that the length of the first measurement time window is less than a first threshold, that the measurement mode of the first PRS frequency layer is the mode 1.

With reference to the first aspect, in some implementations of the first aspect, the method further includes: The terminal device sends third indication information to the network device, where the third indication information indicates that the length of the second measurement time window of the second PRS frequency layer is greater than or equal to a second threshold; or the third indication information indicates a first recommended value, and the first recommended value is time other than the duration of the PRS resource in the length of the second measurement time window of the second PRS frequency layer.

Based on the foregoing technical solution, the network device may determine the length of the second measurement time window of the second PRS frequency layer based on the third indication information, so that the network device can configure the length of the second measurement time window of the second PRS frequency layer for the terminal device based on low-delay related information, and the terminal device can perform measurement in the mode 2 based on a requirement of the terminal device.

With reference to the first aspect, in some implementations of the first aspect, the method further includes: The terminal device receives fourth indication information from the network device, where the fourth indication information indicates whether a second PPW is in an active state, and the second PPW is associated with the second PRS frequency layer in the Q PRS frequency layers. The terminal device determines the second measurement time window of the second PRS frequency layer based on the fourth indication information.

The second PRS frequency layer may be configured by the LMF for the terminal device, and the second measurement time window (for example, the second PPW or a second MG) may be configured by the network device for the terminal device.

Based on the foregoing technical solution, the terminal device may determine the second measurement time window of the second PRS frequency layer based on the fourth indication information, so that the measurement behavior of the terminal device can be determined, and it is ensured that the terminal device, the network device, and the LMF have a consistent understanding.

With reference to the first aspect, in some implementations of the first aspect, that the terminal device determines the second measurement time window of the second PRS frequency layer based on the fourth indication information includes: When the fourth indication information indicates that the second PPW is in the active state, the terminal device determines that the second measurement time window is the second PPW; or when the fourth indication information indicates that the second PPW is in an inactive state, the terminal device determines that the second measurement time window is the second MG.

With reference to the first aspect, in some implementations of the first aspect, the method further includes: The terminal device receives fourth indication information from the network device, where the fourth indication information indicates whether a first positioning reference signal processing window PPW is in an active state, and the first PPW is associated with the first PRS frequency layer in the P PRS frequency layers. The terminal device determines the first measurement time window of the first PRS frequency layer based on the fourth indication information.

The first PRS frequency layer may be configured by the LMF for the terminal device, and the first measurement time window (for example, the first PPW or a first MG) may be configured by the network device for the terminal device.

Based on the foregoing technical solution, the terminal device may determine the first measurement time window of the first PRS frequency layer based on the fourth indication information, so that the measurement behavior of the terminal device can be determined, and it is ensured that the terminal device, the network device, and the LMF have a consistent understanding.

With reference to the first aspect, in some implementations of the first aspect, that the terminal device determines the first measurement time window of the first PRS frequency layer based on the fourth indication information includes: When the fourth indication information indicates that the first PPW is in the active state, the terminal device determines that the first measurement time window is the first PPW; or when the fourth indication information indicates that the first PPW is in an inactive state, the terminal device determines that the first measurement time window is the first measurement gap MG.

According to a second aspect, this application provides a communication method. The method may be performed by a terminal device or a chip used in a terminal device. The following uses an example in which the method is performed by the terminal device for description.

The method may include: The terminal device determines first time, where the first time is sampling time for measuring a PRS frequency layer in a mode 2.

In other words, when measuring the PRS frequency layer in the mode 2, the terminal device samples a PRS resource in the first time of a measurement time window of the PRS frequency layer.

Based on the foregoing technical solution, the sampling time for measuring the PRS frequency layer in the mode 2 is specified, so that enough processing time for measuring the PRS frequency layer can be reserved in the measurement time window, to ensure that the terminal device can complete processing in the measurement time window. In this way, a measurement delay is further reduced.

With reference to the second aspect, in some implementations of the second aspect, the first time is duration of the PRS resource, the duration of the PRS resource is in a first window, a length of the first window is a difference between a length of the measurement time window of the PRS frequency layer and T2, and a start position of the first window is a start point of the length of the measurement time window, where T2 is a processing time capability of the terminal device for measuring the PRS frequency layer.

With reference to the second aspect, in some implementations of the second aspect, the first time is duration of the PRS resource, the duration of the PRS resource is less than or equal to N2, the duration of the PRS resource is in a first window, a length of the first window is a difference between a length of the measurement time window of the PRS frequency layer and T2, and a start position of the first window is a start point of the length of the measurement time window, where N2 is a duration capability of the terminal device for measuring the PRS frequency layer, and T2 is a processing time capability of the terminal device for measuring the PRS frequency layer.

With reference to the second aspect, in some implementations of the second aspect, the first time is a smallest value between duration of the PRS resource and N2, the duration of the PRS resource is in a first window, a length of the first window is a difference between a length of the measurement time window of the PRS frequency layer and T2, and a start position of the first window is a start point of the length of the measurement time window, where N2 is a duration capability of the terminal device for measuring the PRS frequency layer, and T2 is a processing time capability of the terminal device for measuring the PRS frequency layer.

According to a third aspect, this application provides a communication method. The method may be performed by a terminal device or a chip used in a terminal device. The following uses an example in which the method is performed by the terminal device for description.

The method may include: The terminal device reports a capability to a location management function LMF, where the capability is associated with a positioning reference signal PRS frequency layer. The terminal device determines a measurement mode of the PRS frequency layer based on the capability.

Based on the foregoing technical solution, the terminal device may determine, based on the capability reported to the LMF, that the measurement mode of the PRS frequency layer is a mode 1 or a mode 2, so that measurement behavior of the terminal device can be determined.

With reference to the third aspect, in some implementations of the third aspect, the capability includes at least one of the following: {N, T} or {N2, T2}, where N and N2 are duration capabilities of the terminal device for measuring the PRS frequency layer, and T and T2 are processing time capabilities of the terminal device for measuring the PRS frequency layer.

With reference to the third aspect, in some implementations of the third aspect, that the terminal device determines a measurement mode of the PRS frequency layer based on the capability includes: When the capability is {N, T}, the terminal device determines that the measurement mode of the PRS frequency layer is the mode 1; or when the capability is {N2, T2}, the terminal device determines that the measurement mode of the PRS frequency layer is the mode 2.

With reference to the third aspect, in some implementations of the third aspect, the capability is {N, T} and {N2, T2}. That the terminal device determines a measurement mode of the PRS frequency layer based on the capability includes: The terminal device receives first indication information from the LMF, where the first indication information indicates that the measurement mode of the PRS frequency layer is the mode 1 or the mode 2. The terminal device determines, based on the first indication information, that the measurement mode of the PRS frequency layer is the mode 1 or the mode 2.

It should be understood that, when the terminal device determines, based on the first indication information, that the measurement mode of the PRS frequency layer is the mode 2, a condition that the terminal device correctly performs measurement is that a length of a measurement time window configured by a network device is greater than or equal to a first threshold.

Based on the foregoing technical solution, the terminal device may determine, based on the first indication information, that the measurement mode of the PRS frequency layer is the mode 1 or the mode 2, so that the measurement behavior of the terminal device can be determined.

With reference to the third aspect, in some implementations of the third aspect, the capability is {N, T} and {N2, T2}. That the terminal device determines a measurement mode of the PRS frequency layer based on the capability includes: The terminal device receives second indication information from a network device, where the second indication information indicates a length of a measurement time window of the PRS frequency layer. The terminal device determines, based on the second indication information, that the measurement mode of the PRS frequency layer is the mode 1 or the mode 2.

Based on the foregoing technical solution, the terminal device may determine, based on the second indication information, that the measurement mode of the PRS frequency layer is the mode 1 or the mode 2, so that the measurement behavior of the terminal device can be determined.

With reference to the third aspect, in some implementations of the third aspect, that the terminal device determines, based on the second indication information, that the measurement mode of the PRS frequency layer is the mode 1 or the mode 2 includes: When the length of the measurement time window of the PRS frequency layer is greater than or equal to a first threshold, the terminal device determines that the measurement mode of the PRS frequency layer is the mode 2; or when the length of the measurement time window of the PRS frequency layer is less than a first threshold, the terminal device determines that the measurement mode of the PRS frequency layer is the mode 1.

With reference to the third aspect, in some implementations of the third aspect, the method further includes: The terminal device sends third indication information to the network device, where the third indication information indicates that the length of the measurement time window of the PRS frequency layer is greater than or equal to a second threshold; or the third indication information indicates a first recommended value, and the first recommended value is time other than duration of a PRS resource in the length of the measurement time window of the PRS frequency layer.

According to a fourth aspect, this application provides a communication method. The method may be performed by a terminal device or a chip used in a terminal device. The following uses an example in which the method is performed by the terminal device for description.

The method may include: The terminal device receives fourth indication information from a network device, where the fourth indication information indicates whether a positioning reference signal processing window PPW is in an active state, and the PPW is associated with a positioning reference signal PRS frequency layer. The terminal device determines a measurement time window of the PRS frequency layer based on the fourth indication information.

The PRS frequency layer may be configured by an LMF for the terminal device, and the measurement time window (for example, the PPW or an MG) may be configured by the network device for the terminal device.

Based on the foregoing technical solution, the terminal device may determine the measurement time window of the PRS frequency layer based on the fourth indication information, so that measurement behavior of the terminal device can be determined, and it is ensured that the terminal device, the network device, and the LMF have a consistent understanding.

With reference to the fourth aspect, in some implementations of the fourth aspect, that the terminal device determines a measurement time window of the PRS frequency layer based on the fourth indication information includes: When the fourth indication information indicates that the PPW is in the active state, the terminal device determines that the measurement time window of the PRS frequency layer is the PPW; or when the fourth indication information indicates that the PPW is in an inactive state, the terminal device determines that the measurement time window of the PRS frequency layer is the measurement gap MG.

With reference to the fourth aspect, in some implementations of the fourth aspect, when the fourth indication information indicates that the PPW is in the inactive state, the PPW may not be associated with the PRS frequency layer, and the terminal device determines that the measurement time window of the PRS frequency layer is the measurement gap MG.

According to a fifth aspect, this application provides a communication method. The method may be performed by a first device or a chip used in a first device. The following uses an example in which the method is performed by the first device for description.

The method may include: The first device sends third indication information to a network device, where the third indication information indicates that a length of a measurement time window of a PRS frequency layer is greater than or equal to a second threshold; or the third indication information indicates a first recommended value, and the first recommended value is time other than duration of a PRS resource in a length of a measurement time window of a PRS frequency layer.

Based on the foregoing technical solution, the network device may determine the length of the measurement time window of the PRS frequency layer based on the third indication information, so that the network device can configure the length of the measurement time window of the PRS frequency layer for a terminal device based on low-delay related information, and the terminal device can perform measurement in a mode 2 based on a requirement of the first device.

The first device may be a terminal device, or may be a location management function LMF.

According to a sixth aspect, this application provides a communication method. The method may be performed by a network device or a chip used in a network device. The following uses an example in which the method is performed by the network device for description.

The method may include: The network device receives third indication information from a first device, where the third indication information indicates that a length of a measurement time window of a PRS frequency layer is greater than or equal to a second threshold; or the third indication information indicates a first recommended value, and the first recommended value is time other than duration of a PRS resource in a length of a measurement time window of a PRS frequency layer. The network device determines the length of the measurement time window of the PRS frequency layer based on the third indication information.

Based on the foregoing technical solution, the network device may determine the length of the measurement time window of the PRS frequency layer based on the third indication information, so that the network device can configure the length of the measurement time window of the PRS frequency layer for a terminal device based on low-delay related information, and the terminal device can perform measurement in a mode 2 based on a requirement of the first device.

The first device may be a terminal device, or may be a location management function LMF.

With reference to the sixth aspect, in some implementations of the sixth aspect, that the network device determines the length of the measurement time window of the PRS frequency layer based on the third indication information includes: When the third indication information indicates that the length of the measurement time window of the PRS frequency layer is greater than or equal to the second threshold, the network device determines that the length of the measurement time window of the PRS frequency layer is greater than or equal to the second threshold; or when the third indication information indicates the first recommended value, the network device determines that the length of the measurement time window of the PRS frequency layer is a sum of the first recommended value and the duration of the PRS resource.

With reference to the sixth aspect, in some implementations of the sixth aspect, the method further includes: The network device sends second indication information to the terminal device, where the second indication information indicates the length of the measurement time window of the PRS frequency layer.

According to a seventh aspect, this application provides a communication method. The method may be performed by a location management function LMF or a chip used in an LMF. The following uses an example in which the method is performed by the LMF for description.

The method may include: The location management function LMF receives a capability reported by a terminal device, where the reported capability is {N, T} and {N2, T2}, and the reported capability is associated with a positioning reference signal PRS frequency layer, where N and N2 are duration capabilities of the terminal device for measuring the PRS frequency layer, and T and T2 are processing time capabilities of the terminal device for measuring the PRS frequency layer. The LMF sends first indication information to the terminal device based on the reported capability, where the first indication information indicates that a measurement mode of the PRS frequency layer is a mode 1 or a mode 2.

Based on the foregoing technical solution, the terminal device may determine, based on the first indication information, that the measurement mode of the PRS frequency layer is the mode 1 or the mode 2, so that measurement behavior of the terminal device can be determined.

According to an eighth aspect, a communication apparatus is provided. The apparatus is configured to perform the method in any one of the possible implementations of the first aspect to the seventh aspect. Specifically, the apparatus may include units and/or modules configured to perform the method in any one of the possible implementations of the first aspect to the seventh aspect, for example, a processing unit and/or a communication unit.

In an implementation, the apparatus is a terminal device, a network device, or a location management function LMF. When the apparatus is the terminal device, the network device, or the LMF, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device, a network device, or an LMF. When the apparatus is the chip, the chip system, or the circuit used in the terminal device, the network device, or the LMF, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a ninth aspect, a communication apparatus is provided. The apparatus includes at least one processor, configured to execute a computer program or instructions stored in a memory, to perform the method in any one of the possible implementations of the first aspect to the seventh aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device, a network device, or a location management function LMF.

In another implementation, the apparatus is a chip, a chip system, or a circuit used in a terminal device, a network device, or an LMF.

According to a tenth aspect, this application provides a processor, configured to perform the methods according to the foregoing aspects.

Sending, obtaining/receiving, and other operations related to the processor may be understood as output, receiving or input, and other operations performed by the processor, or sending and receiving operations performed by a radio frequency circuit and an antenna, unless otherwise specified or the operations conflict with actual functions or internal logic of the operations in related descriptions. This is not limited in this application.

According to an eleventh aspect, a computer-readable storage medium is provided. The computer-readable medium stores program code to be executed by a device, and the program code is for performing the method in any one of the possible implementations of the first aspect to the seventh aspect.

According to a twelfth aspect, a computer program product including instructions is provided. When the computer program product runs on a computer, the computer is enabled to perform the method in any one of the possible implementations of the first aspect to the seventh aspect.

According to a thirteenth aspect, this application further provides a system. The system includes a terminal device, and the terminal device may be configured to perform the steps performed by the terminal device in any method in the first aspect to the fifth aspect.

In some possible implementations, the system may further include a network device, and the network device may be configured to perform the steps performed by the network device in the sixth aspect.

In some possible implementations, the system may further include a location management function LMF, and the LMF may be configured to perform the steps performed by the LMF in the fifth aspect or the seventh aspect.

In some possible implementations, the system may further include another device that interacts with one or more of the terminal device, the network device, and the LMF in the solutions provided in embodiments of this application, or the like.

## BRIEF DESCRIPTION OF DRAWINGS

FIG. 1 is a diagram of a communication method 100 according to an embodiment of this application;
FIG. 2 is a diagram of a scenario of a communication method according to an embodiment of this application;
FIG. 3 is a diagram of a scenario of another communication method according to an embodiment of this application;
FIG. 4 is a diagram of a communication method 400 according to an embodiment of this application;
FIG. 5 is a diagram of a communication method 500 according to an embodiment of this application;
FIG. 6 is a diagram of a communication method 600 according to an embodiment of this application;
FIG. 7 is a block diagram of a communication apparatus 700 according to an embodiment of this application;
FIG. 8 is a block diagram of another communication apparatus 800 according to an embodiment of this application; and
FIG. 9 is a diagram of a chip system 900 according to an embodiment of this application.

## DESCRIPTION OF EMBODIMENTS

The following describes technical solutions of this application with reference to accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may be a device that provides a user with voice/data, for example, a handheld device or vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and largesized devices that can implement complete or partial functions without depending on smartphones, such as smart watches or smart glasses, and devices that focus only on one type of application function and need to be used together with other devices such as smartphones, such as various smart bands or smart jewelry for monitoring physical signs.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for interconnection between a person and a machine or between things.

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete device.

A network device in embodiments of this application may be a device configured to communicate with the terminal device. The network device may be a base station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB, or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network or a network device in a future evolved PLMN network, or one or a group of antenna panels (including a plurality of antenna panels) of a base station in a 5G system. Alternatively, the network device may be a network node that constitutes a gNB or a transmission point, for example, a baseband unit (baseband unit, BBU) or a distributed unit (distributed unit, DU). This is not limited in embodiments of this application.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

A location management function (location management function, LMF) is responsible for supporting different types of location services related to the terminal device, including positioning the terminal device and performing transmission of assistance data to the terminal device. The LMF may exchange a signal with the network device, for example, the gNB, and the terminal device. For example, information is exchanged between the LMF and the gNB by using a new radio positioning protocol annex (new radio positioning protocol annex, NRPPa) message. For example, configuration information of a positioning reference signal (positioning reference signal, PRS) or a sounding reference signal (sounding reference signal, SRS), cell timing, cell location information, and the like are obtained. For another example, terminal device capability information, assistance information, measurement information, and the like are transferred between the LMF and the terminal device by using an LTE positioning protocol (LTE positioning protocol, LPP) message.

For ease of understanding of embodiments of this application, terms in this application are briefly described.

1. PRS frequency layer

The RRS frequency layer may be a set of PRS resource sets, and the PRS resource set has a common parameter configured by using signaling, where the signaling may be NR-DL-PRS-Positioning Frequency Layer.

2. Mode

Modes mentioned in embodiments of this application include a mode 1 and a mode 2. When processing time of a terminal device for measuring the PRS frequency layer may be in a measurement time window of the PRS frequency layer, or may be out of a measurement time window of the PRS frequency layer, a corresponding mode is the mode 1. When processing time of the terminal device for measuring the PRS frequency layer is in a measurement time window of the PRS frequency layer, a corresponding mode is the mode 2.

3. Measurement time window

The measurement time window may be a measurement gap (measurement gap, MG), may be a positioning reference signal processing window (positioning reference signal processing window, PPW), or may be another time window. This is not limited in this application. In the measurement time window, the terminal device may determine measurement time of the PRS frequency layer based on different modes. A specific mode used by the terminal device to determine the measurement time of the PRS frequency layer in the measurement time window is not limited in embodiments of this application. For example, in the MG, the terminal device may measure the measurement time of the PRS frequency layer in the mode 1, or may measure the measurement time of the PRS frequency layer in the mode 2. For another example, in the PPW, the terminal device may measure the measurement time of the PRS frequency layer in the mode 1, or may measure the measurement time of the PRS frequency layer in the mode 2. The PRS frequency layer may be configured by the LMF for the terminal device, and the PPW and the MG may be configured by a network device for the terminal device.

In embodiments of this application, when the measurement time window is the PPW, a length of the measurement time window is a length of the PPW; or when the measurement time window is the MG, a length of the measurement time window is a length other than 0.5 ms or 0.25 ms in the front of and in the end of a length of the MG.

4. {N, T}

{N, T} is a capability that is reported by the terminal device to the LMF and that is introduced in the R16 standard, where N is a duration capability of the terminal device for measuring the PRS frequency layer, T is a processing time capability of the terminal device for measuring the PRS frequency layer, and {N, T} is associated with the mode 1 used when the terminal device determines the measurement time of the PRS frequency layer. T may be within the length of the measurement time window, or may be out of the length of the measurement time window. When T is out of the length of the measurement time window, impact on data receiving of the terminal device is small, but the processing time of the terminal device for measuring the PRS frequency layer is increased.

5. {N2, T2}

{N2, T2} is a capability that is reported by the terminal device to the LMF and that is introduced in the R17 standard, where N2 is a duration capability of the terminal device for measuring the PRS frequency layer, T2 is a processing time capability of the terminal device for measuring the PRS frequency layer, and {N2, T2} is associated with the mode 2 used when the terminal device determines the measurement time of the PRS frequency layer. T2 is within the length of the measurement time window. In this case, the data receiving of the terminal device is greatly affected, but the processing time of the terminal device for measuring the PRS frequency layer is reduced. Therefore, PRS frequency layer measurement performed by the terminal device based on the mode 2 is low-delay measurement.

In a conventional technology, when there is more than one PRS frequency layer, how the terminal device determines total measurement time for measuring at least one PRS frequency layer based on the mode 2 is not described in a related solution currently.

In view of the foregoing technical problem, this application provides a communication method, so that the terminal device can determine the total measurement time for measuring the at least one PRS frequency layer based on the mode 2. According to the method, the total measurement time of the terminal device for measuring the at least one PRS frequency layer in the mode 2 can be reduced.

Embodiments provided in this application are described below in detail with reference to the accompanying drawings.

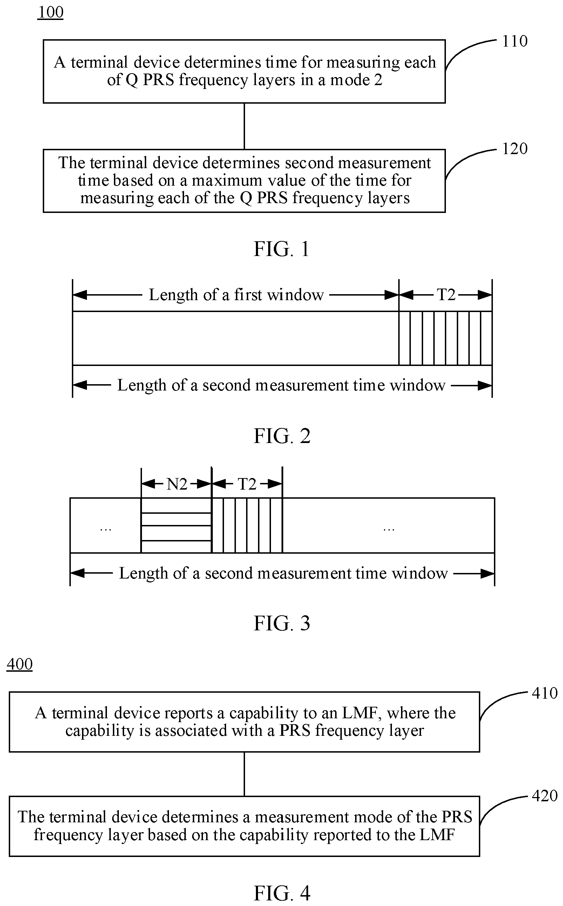

FIG. 1 is a diagram of a communication method 100 according to an embodiment of this application. As shown in FIG. 1, the method 100 may include the following steps.

110: A terminal device determines time for measuring each of Q PRS frequency layers in a mode 2.

Q is a positive integer.

Optionally, time of the terminal device for measuring a second PRS frequency layer in the Q PRS frequency layers may be determined based on first time and/or second time.

The second PRS frequency layer is one of the Q PRS frequency layers.

The first time is sampling time for measuring the second PRS frequency layer.

The second time is measurement time for measuring a last sampling point of the second PRS frequency layer.

For example, the time of the terminal device for measuring the second PRS frequency layer in the mode 2 satisfies Formula (1):

$$T_{meas,i} = \left( M * \left\lceil \frac{N_{PRS,i}^{slot}}{N'} \right\rceil \left\lceil \frac{L_{available\_PRS,i}}{N2} \right\rceil * N_{sample} - 1 \right) * T_{effect,i} + T_{last,i} \qquad (1)$$

$$T_{effect,i} = \left\lceil \frac{T2}{T_{available\_PRS,i}} \right\rceil * T_{available\_PRS,i} \quad \text{and} \quad T_{available\_PRS,i} = LCM(T_{PRS,i}, T_{window,i}) \qquad (2)$$

$T_{meas,i}$ is the time of the terminal device for measuring the second PRS frequency layer, $L_{available\_PRS,i}$ is the first time, $T_{last,i}$ is the second time, and $M$ is a factor that amplifies the measurement time of the second PRS frequency layer due to another factor, for example, a beam sweeping factor used when the terminal device performs millimeter-wave frequency measurement by using a plurality of receive beams. A factor that causes second measurement time to be amplified due to another factor is not limited in this application. $N_{PRS,i}^{slot}$ is a maximum quantity of PRS resources that need to be measured by the terminal device in each slot, $N'$ is a capability of the terminal device for measuring a quantity of PRS resources in each slot, N2 is a duration capability of the terminal device for measuring the second PRS frequency layer,

$N_{sample}$ is a quantity of sampling points for measuring the second PRS frequency layer, $T_{effect,i}$ is a valid measurement periodicity of the second PRS frequency layer, $T_{window,i}$ is a periodicity of a second measurement time window of the second PRS frequency layer, T2 is a processing time capability of the terminal device for measuring the second PRS frequency layer, $T_{available\_PRS,i}$ is an available periodicity of the second PRS frequency layer, $T_{available\_PRS,i}$ may be a least common multiple of $T_{PRS,i}$ and $T_{window,i}$, and $T_{PRS,i}$ is a periodicity of the second PRS frequency layer.

It should be understood that the terminal device may determine, based on Formula (1) and Formula (2), the time for measuring the second PRS frequency layer in the mode 2, or may determine, based on Formula (1) and Formula (2), time for measuring a PRS frequency layer other than the second PRS frequency layer in the mode 2.

120: The terminal device determines the second measurement time based on a maximum value of the time for measuring each of the Q PRS frequency layers.

For example, the terminal device determines that the second measurement time satisfies Formula (3):

$$T_{meas2} = \max(T_{meas,i} + + T_{uncertaint y,i}) \tag{3}$$

$T_{meas2}$ is the second measurement time, and $T_{uncertaint y,i}$ is a margin greater than or equal to zero. For example, $T_{uncertaint y,i}$ is a distance from a start moment of the second measurement time (in other words, a 1st measurement time window in all measurement time windows corresponding to the Q PRS frequency layers) to a 1st measurement time window of an $i$th PRS frequency layer, and $T_{meas,i}$ is time of the terminal device for measuring the $i$th PRS frequency layer in the Q PRS frequency layers.

The $i$th PRS frequency layer is one of the Q PRS frequency layers, that is, the $i$th PRS frequency layer may be the second PRS frequency layer.

Based on the foregoing technical solution, the terminal device may determine the time for measuring each of the Q PRS frequency layers in the mode 2, and determine the second measurement time based on the maximum value of the time for measuring each of the Q PRS frequency layers. According to the method, total measurement time of the terminal device for measuring at least one PRS frequency layer in the mode 2 can be reduced.

Based on step 110, the terminal device may determine the first time in the following several possible manners.

In a possible manner, the first time is duration of a PRS resource, the duration of the PRS resource is in a first window, a length of the first window is a difference between a length of the second measurement time window of the second PRS frequency layer and T2, and a start position of the first window is a start point of the length of the second measurement time window.

T2 is the processing time capability of the terminal device for measuring the second PRS frequency layer.

As shown in FIG. 2, the length of the first window is the difference between the length of the second measurement time window of the second PRS frequency layer and T2, and the duration of the PRS resource is in the first window. It may be understood as that the duration of the PRS resource may be the total length of the first window, or may be a part of the length of the first window.

It should be understood that the second measurement time window may periodically occur, a second measurement time window in one periodicity may be denoted as an instance of the second measurement time window, and second measurement time windows in a plurality of periodicities may be denoted as a plurality of instances of the second measurement time window. If there are a plurality of instances of the second measurement time window in one $T_{available\_PRS,i}$ or $T_{PRS,i}$, the first time is duration of the PRS resource in $T_{available\_PRS,i}$ or $T_{PRS,i}$, and the duration of the PRS resource is in first windows of the plurality of instances of the second measurement time window. In other words, the first time is the duration of the PRS resource in one $T_{available\_PRS,i}$ or $T_{PRS,i}$. When the first time is calculated, only the PRS resource in the first window is considered. For example, when the first time is calculated, only a PRS resource in first H ms in the second measurement time window is considered, where H is a difference between the length of the second measurement time window and T2.

In another possible manner, the first time is a smallest value between duration of a PRS resource and N2, the duration of the PRS resource is in a first window, a length of the first window is a difference between a length of the second measurement time window of the second PRS frequency layer and T2, and a start position of the first window is a start point of the length of the second measurement time window.

That the first time is a smallest value between the duration of the PRS resource and N2 may be understood as that the first time is the duration of the PRS resource, and the duration of the PRS resource is less than or equal to N2.

T2 is the processing time capability of the terminal device for measuring the second PRS frequency layer, and N2 is the duration capability of the terminal device for measuring the second PRS frequency layer.

As shown in FIG. 2, the length of the first window is the difference between the length of the second measurement time window of the second PRS frequency layer and T2, and the duration of the PRS resource is in the first window. It may be understood as that the duration of the PRS resource may be the total length of the first window, or may be a part of the length of the first window. In this case, the first time is a smallest value between the duration of the PRS resource and N2.

For example, when the duration of the PRS resource is greater than N2, the first time is N2. For another example, when the duration of the PRS resource is less than N2, the first time is the duration of the PRS resource. For another example, when the duration of the PRS resource is equal to N2, the first time may be N2, or may be the duration of the PRS resource.

In another possible manner, as shown in FIG. 3, assuming that a length of the second measurement time window is denoted as L, the length L of the second measurement time window may be divided into $M = \lfloor L/(N2+T2) \rfloor$ time periods, where a length of an $m^{th}$ time period is a sum of N2 and T2. In the $m^{th}$ time period, first sub-time is a smallest value between duration of a PRS resource in the $m^{th}$ time period and N2. In the second measurement time window, the first time is a sum of M pieces of first sub-time.

T2 is the processing time capability of the terminal device for measuring the second PRS frequency layer, and N2 is the duration capability of the terminal device for measuring the second PRS frequency layer.

Based on the foregoing technical solution, sampling time for measuring the second PRS frequency layer in the mode 2 is specified, so that enough processing time for measuring the second PRS frequency layer can be reserved in the second measurement time window, to ensure that the terminal device can complete processing in the second measurement time window. In this way, a measurement delay is further reduced.

Based on step 110, the terminal device may determine the second time in the following several possible manners.

In a possible manner, when all PRS resources of the second PRS frequency layer are in the second measurement time window of the second PRS frequency layer, the second time is the length of the second measurement time window of the second PRS frequency layer.

It should be understood that there may be one or more PRS resources in a bandwidth range in which the second PRS frequency layer is located. This is not limited in this embodiment of this application.

For example, it is assumed that there are six PRS resources in the bandwidth range in which the second PRS frequency layer is located. When the six PRS resources are all in the second measurement time window, the second time is the length of the second measurement time window.

In another possible manner, when a PRS resource of the second PRS frequency layer is not in the second measurement time window of the second PRS frequency layer, the second time is the available periodicity of the second PRS frequency layer.

For example, it is assumed that there are six PRS resources in a bandwidth range in which the second PRS frequency layer is located. When two PRS resources are not in the second measurement time window, the second time is the available periodicity of the second PRS frequency layer.

Optionally, the terminal device may determine time for measuring each of P PRS frequency layers in a mode 1.

For a calculation formula of the time of the terminal device for measuring each of the P PRS frequency layers in the mode 1, refer to Formula (1), Formula (2), and an existing solution. Details are not described herein again.

Optionally, the terminal device determines first measurement time based on a sum of time for measuring all of the P PRS frequency layers, where P is a positive integer.

For example, the terminal device determines that the first measurement time satisfies Formula (4):

$$T_{meas1} = sum(T_{meas,i}) + (P-1) * \max(T_{effect,i}) \qquad (4)$$

$T_{meas1}$ is the first measurement time, $T_{meas,i}$ is time of the terminal device for measuring an $i^{th}$ PRS frequency layer in the P PRS frequency layers, and $T_{effect,i}$ is a valid measurement periodicity of a first PRS frequency layer in the P PRS frequency layers.

The first PRS frequency layer is one of the P PRS frequency layers, and the $i^{th}$ PRS frequency layer is one of the P PRS frequency layers, that is, the $i^{th}$ PRS frequency layer may be the first PRS frequency layer.

Optionally, the terminal device determines third measurement time based on the first measurement time and the second measurement time.

The third measurement time is time for measuring P+Q PRS frequency layers.

For example, the terminal device determines the third measurement time based on the first measurement time, the second measurement time, and a first margin, where the third measurement time is a sum of the first measurement time, the second measurement time, and the first margin.

The first margin may be time for conversion between different frequency layers, and the first margin is a number greater than or equal to 0. For example, the first margin may be time for converting from a first frequency layer to a second frequency layer. For another example, the first margin may be time for converting from a second frequency layer to a first frequency layer. For another example, the first margin may be $\max(T_{effect,i})$.

In the conventional technology, a measurement mode of a PRS frequency layer may be the mode 1 or the mode 2. However, how the terminal device determines whether the measurement mode of the PRS frequency layer is the mode 1 or the mode 2 is not described in a related solution currently. For example, how the terminal device determines that a measurement mode of the first PRS frequency layer mentioned in the method 100 is the mode 1, and how the terminal device determines that a measurement mode of the second PRS frequency layer is the mode 2 is not described in the existing solution.

In view of the foregoing technical problem, this application provides a communication method. According to the method, in this application, the terminal device can determine whether the measurement mode of the PRS frequency layer is the mode 1 or the mode 2, so that measurement behavior of the terminal device can be determined.

FIG. 4 is a diagram of another communication method 400 according to an embodiment of this application. As shown in FIG. 4, the method 400 may include the following steps.

410: A terminal device reports a capability to an LMF, where the capability is associated with a PRS frequency layer.

Correspondingly, the LMF receives the capability reported by the terminal device.

The capability may include at least one of the following: {N, T} or {N2, T2}.

N and N2 are duration capabilities of the terminal device for measuring the PRS frequency layer, and T and T2 are processing time capabilities of the terminal device for measuring the PRS frequency layer.

For example, according to the method 100, the terminal device may report a second capability to the LMF, where the second capability is associated with a second PRS frequency layer, and the second PRS frequency layer is one of Q PRS frequency layers.

For example, according to the method 100, the terminal device may report a first capability to the LMF, where the first capability is associated with a first PRS frequency layer, and the first PRS frequency layer is one of P PRS frequency layers.

That the capability reported by the terminal device to the LMF is associated with the PRS frequency layer may be understood as that the terminal device reports the capability to the LMF for a bandwidth range (for example, a frequency band) in which the PRS frequency layer is located. For example, the terminal device reports the first capability to the LMF for a bandwidth range in which the first PRS frequency layer is located. For another example, the terminal device reports the second capability to the LMF for a bandwidth range in which the second PRS frequency layer is located.

420: The terminal device determines a measurement mode of the PRS frequency layer based on the capability reported to the LMF.

For example, according to the method 100, the terminal device may determine, based on the first capability reported to the LMF, that a measurement mode of the first PRS frequency layer is a mode 1.

For example, the terminal device may determine, based on the second capability reported to the LMF, that a measurement mode of the second PRS frequency layer is a mode 2.

Based on the foregoing technical solution, the terminal device may determine, based on the capability reported to the LMF, whether the measurement mode of the PRS frequency layer is the mode 1 or the mode 2, so that measurement behavior of the terminal device can be determined.

Based on step 420, the terminal device may determine, in the following several manners, the measurement mode of the PRS frequency layer based on the capability reported to the LMF.

Manner #A: When the capability reported by the terminal device to the LMF is {N, T}, the terminal device determines that the measurement mode of the PRS frequency layer is the mode 1; or when the capability reported by the terminal device to the LMF is {N2, T2}, the terminal device determines that the measurement mode of the PRS frequency layer is the mode 2.

For example, according to the method 100, when the first capability reported by the terminal device to the LMF is {N, T}, the terminal device may determine that the measurement mode of the first PRS frequency layer is the mode 1.

For example, according to the method 100, when the second capability reported by the terminal device to the LMF is {N2, T2}, the terminal device may determine that the measurement mode of the second PRS frequency layer is the mode 2.

Manner #B: The capability reported by the terminal device to the LMF is {N, T} and {N2, T2}.

Correspondingly, the LMF receives the capability reported by the terminal device, where the reported capability is {N, T} and {N2, T2}. The LMF sends first indication information to the terminal device based on the reported capability, where the first indication information indicates that the measurement mode of the PRS frequency layer is the mode 1 or the mode 2.

Correspondingly, the terminal device receives the first indication information from the LMF, and the terminal device may determine, based on the first indication information, that the measurement mode of the PRS frequency layer is the mode 1 or the mode 2.

For example, according to the method 100, when the first capability reported by the terminal device to the LMF is {N, T} and {N2, T2}, the terminal device may receive first indication information from the LMF, where the first indication information indicates that the measurement mode of the first PRS frequency layer is the mode 1.

For example, according to the method 100, when the second capability reported by the terminal device to the LMF is {N, T} and {N2, T2}, the terminal device may receive first indication information from the LMF, where the first indication information indicates that the measurement mode of the second PRS frequency layer is the mode 2.

Manner #C: When the capability reported by the terminal device to the LMF is {N, T} and {N2, T2}, the terminal device receives second indication information from a network device, where the second indication information indicates a length of a measurement time window of the PRS frequency layer. The terminal device may determine, based on the second indication information, that the measurement mode of the PRS frequency layer is the mode 1 or the mode 2.

For example, when the length of the measurement time window of the PRS frequency layer is greater than or equal to a first threshold, the terminal device determines that the measurement mode of the PRS frequency layer is the mode 2; or when the length of the measurement time window of the PRS frequency layer is less than a first threshold, the terminal device determines that the measurement mode of the PRS frequency layer is the mode 1.

The first threshold may be T2+X1, X1 is a number greater than or equal to 0, and X1 may be predefined in a protocol. For example, the protocol predefines that X1 may be a length of one slot. Alternatively, X1 may be N2, or may be another value. This is not limited in this embodiment of this application.

For example, according to the method 100, when the first capability reported by the terminal device to the LMF is {N, T} and {N2, T2}, the terminal device may receive second indication information from a network device, where the second indication information indicates a length of a first measurement time window of the first PRS frequency layer. The terminal device determines, based on a case that the length of the first measurement time window is less than the first threshold, that the measurement mode of the first PRS frequency layer is the mode 1.

For example, according to the method 100, when the second capability reported by the terminal device to the LMF is {N, T} and {N2, T2}, the terminal device may receive second indication information from a network device, where the second indication information indicates a length of a second measurement time window of the second PRS frequency layer. The terminal device determines, based on a case that the length of the second measurement time window is greater than or equal to the first threshold, that the measurement mode of the second PRS frequency layer is the mode 2.

It should be understood that, according to the method 100, when the terminal device reports both the first capability and the second capability to the LMF, the terminal device may determine, in one or different combinations of the manner #A to the manner #C, that the measurement mode of the first PRS frequency layer is the mode 1 and the measurement mode of the second PRS frequency layer is the mode 2.

For example, when the first capability reported by the terminal device to the LMF is {N, T}, and the second capability reported by the terminal device to the LMF is {N2, T2}, the terminal device may determine, in the manner #A, that the measurement mode of the first PRS frequency layer is the mode 1, and the terminal device may determine, in the manner #A, that the measurement mode of the second PRS frequency layer is the mode 2.

For another example, when the first capability reported by the terminal device to the LMF is {N, T}, and the second capability reported by the terminal device to the LMF is {N, T} and {N2, T2}, the terminal device may determine, in the manner #A, that the measurement mode of the first PRS frequency layer is the mode 1, and the terminal device may determine, in the manner #B or the manner #C, that the measurement mode of the second PRS frequency layer is the mode 2.

For another example, when the first capability reported by the terminal device to the LMF is {N, T} and {N2, T2}, and the second capability reported by the terminal device to the LMF is {N2, T2}, the terminal device may determine, in the manner #B or the manner #C, that the measurement mode of the first PRS frequency layer is the mode 1, and the terminal device may determine, in the manner #A, that the measurement mode of the second PRS frequency layer is the mode 2.

For another example, when the first capability reported by the terminal device to the LMF is {N, T} and {N2, T2}, and the second capability reported by the terminal device to the LMF is {N, T} and {N2, T2}, the terminal device may determine, in the manner #B or the manner #C, that the measurement mode of the first PRS frequency layer is the mode 1, and the terminal device may determine, in the manner #B or the manner #C, that the measurement mode of the second PRS frequency layer is the mode 2.

In the conventional technology, the network device may configure the length of the measurement time window of the PRS frequency layer for the terminal device. However, when the length that is of the measurement time window of the PRS frequency layer and that is configured by the network device for the terminal device is small, for example, when the length that is of the measurement time window of the PRS frequency layer and that is configured by the network device for the terminal device is less than the first threshold, the terminal device may fail to determine that the measurement mode of the PRS frequency layer is the mode 2.

Therefore, because the length that is of the measurement time window of the PRS frequency layer and that is configured by the network device for the terminal device does not satisfy a condition of low-delay measurement, the terminal device may fail to perform the low-delay measurement.

For example, according to the method 400, in the manner #A, even if the capability reported by the terminal device to the LMF is {N2, T2}, when the length that is of the measurement time window of the PRS frequency layer and that is configured by the network device for the terminal device is small, the terminal device may fail to correctly perform measurement in the mode 2.

For example, according to the method 400, in the manner #B, when the length that is of the measurement time window of the PRS frequency layer and that is configured by the network device for the terminal device is small, even if the first indication information sent by the LMF to the terminal device indicates that the measurement mode of the PRS frequency layer is the mode 2, the terminal device may also fail to correctly perform measurement in the mode 2. In other words, when the terminal device determines, based on the first indication information, that the measurement mode of the PRS frequency layer is the mode 2, a condition that the terminal device correctly performs the measurement is that the length that is of the measurement time window and that is configured by the network device for the terminal device is greater than or equal to the first threshold.

In view of the foregoing technical problem, this application provides a communication method. According to the method, in this application, the network device can configure the length of the measurement time window of the PRS frequency layer for the terminal device based on low-delay related information, so that the terminal device can perform the measurement in the mode 2 based on a requirement of the LMF or the terminal device.

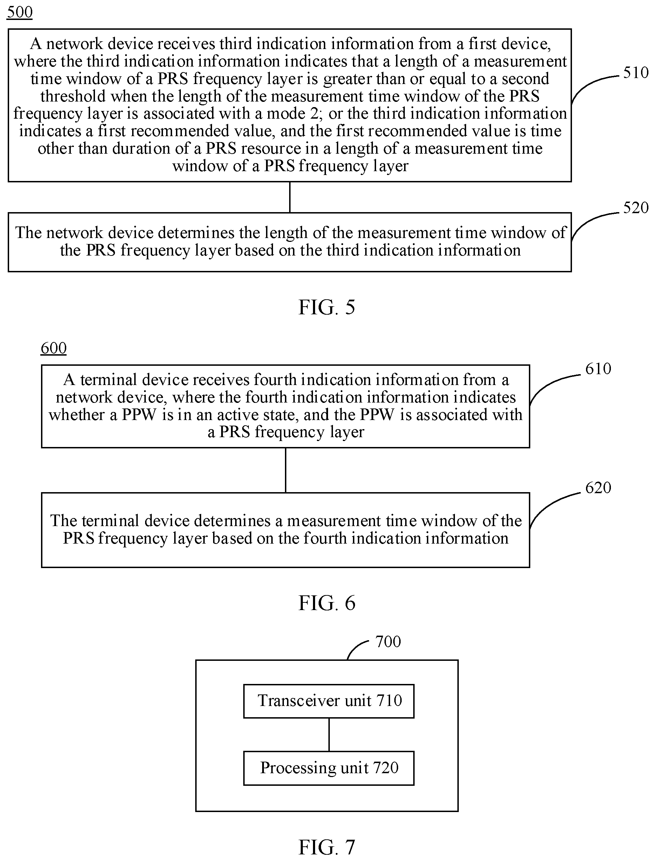

FIG. 5 is a diagram of another communication method 500 according to an embodiment of this application. As shown in FIG. 5, the method 500 may include the following steps.

510: A network device receives third indication information from a first device, where the third indication information indicates that a length of a measurement time window of a PRS frequency layer is greater than or equal to a second threshold when the length of the measurement time window of the PRS frequency layer is associated with a mode 2; or the third indication information indicates a first recommended value, and the first recommended value is time other than duration of a PRS resource in a length of a measurement time window of a PRS frequency layer.

For example, according to the method 100, a terminal device sends third indication information to the network device, where the third indication information indicates that a length of a second measurement time window of a second PRS frequency layer is greater than or equal to the second threshold; or the third indication information indicates the first recommended value, and the first recommended value is time other than duration of a PRS resource in a length of a second measurement time window of a second PRS frequency layer.

For a manner in which the network device obtains the duration of the PRS resource, refer to an existing solution. For example, an LMF may send a measurement preconfiguration request (MEASUREMENT PRECONFIGURATION REQUIRED) message to the network device by using an NRPPa message, where the message includes related information about the duration of the PRS resource, so that the network device can obtain the duration of the PRS resource. Optionally, the first recommended value may be included in the NRPPa message.

The first device is a terminal device or an LMF.

The second threshold may be T2+X2, X2 is a number greater than or equal to 0, and X2 may be predefined in a protocol, may be N2, or may be another value. The second threshold may be the same as a first threshold, or may be different from a first threshold. This is not limited in this embodiment of this application.

The first recommended value may be predefined in a protocol, or may be another value. This is not limited in this embodiment of this application.

The second threshold and the third indication information may be sent to the network device by using same signaling from a same device, may be sent to the network device by using different signaling from a same device, or may be sent to the network device by using different signaling from different devices.

In a possible manner, the second threshold and the third indication information are sent to the network device by using the same signaling from the same device. For example, the terminal device sends the second threshold and the third indication information to the network device by using first signaling. For another example, the LMF sends the second threshold and the third indication information to the network device by using second signaling.

In another possible manner, the second threshold and the third indication information are sent to the network device by using different signaling from the same device. For example, the terminal device sends the second threshold to the network device by using first signaling, and then sends the third indication information to the network device by using second signaling. For another example, the LMF sends the second threshold to the network device by using third signaling, and then sends the third indication information to the network device by using fourth signaling.

In another possible manner, the second threshold and the third indication information are sent to the network device by using different signaling from different devices. For example, the terminal device sends the second threshold to the network device by using first signaling, and the LMF sends the third indication information to the network device by using second signaling. For another example, the LMF sends the second threshold to the network device by using third signaling, and the terminal device sends the third indication information to the network device by using fourth signaling.

520: The network device determines the length of the measurement time window of the PRS frequency layer based on the third indication information.

In a possible manner, when the third indication information indicates that the length of the measurement time window of the PRS frequency layer is associated with the mode 2, the network device determines that the length of the measurement time window of the PRS frequency layer is greater than or equal to the second threshold.

For example, according to the method 100, when the third indication information indicates that a measurement mode of the second PRS frequency layer is the mode 2, the network device may determine that the length of the second measurement time window of the second PRS frequency layer is greater than or equal to the second threshold.

In another possible manner, when the third indication information indicates the first recommended value, the network device determines that the length of the measurement time window of the PRS frequency layer is a sum of the first recommended value and the duration of the PRS resource.

For example, according to the method 100, when the third indication information indicates the first recommended value, the network device may determine that the length of the second measurement time window of the second PRS frequency layer is the sum of the first recommended value and the duration of the PRS resource.

Based on the foregoing technical solution, the network device may determine the length of the measurement time window of the PRS frequency layer based on the third indication information, so that the network device can configure the length of the measurement time window of the PRS frequency layer for the terminal device based on low-delay related information, and the terminal device can perform measurement in the mode 2 based on a requirement of the LMF or the terminal device.

Optionally, the network device sends second indication information to the terminal device, where the second indication information indicates the length of the measurement time window of the PRS frequency layer.

For example, according to the method 100, the network device sends second indication information to the terminal device, where the second indication information indicates a length of a first measurement time window of a first PRS frequency layer, and the second indication information indicates the length of the second measurement time window of the second PRS frequency layer. The length of the second measurement time window may be determined by the network device based on the third indication information.

For descriptions that the terminal device determines, based on the second indication information, that the measurement mode of the PRS frequency layer is a mode 1 or the mode 2, refer to the descriptions in the method 400. Details are not described herein again.

In the conventional technology, the measurement time window of the PRS frequency layer may be a PPW, or may be an MG. However, how the terminal device determines whether the measurement time window of the PRS frequency layer is the PPW or the MG is not described in a related solution currently. For example, how the terminal device determines whether the first measurement time window of the first PRS frequency layer mentioned in the method 100 is a PPW or an MG, and how the terminal device determines whether the second measurement time window of the second PRS frequency layer is a PPW or an MG are not described in an existing solution.

In view of the foregoing technical problem, this application provides a communication method. According to the method, in this application, the terminal device can determine whether the measurement time window of the PRS frequency layer is the PPW or the MG, so that measurement behavior of the terminal device can be determined, and it is ensured that the terminal device, the network device, and the LMF have a consistent understanding.

FIG. 6 is a diagram of another communication method 600 according to an embodiment of this application. As shown in FIG. 6, the method 600 may include the following steps.

610: A terminal device receives fourth indication information from a network device, where the fourth indication information indicates whether a PPW is in an active state, and the PPW is associated with a PRS frequency layer.

The PRS frequency layer may be configured by an LMF for the terminal device, and a PPW and an MG may be configured by the network device for the terminal device.

For example, according to the method 100, the terminal device receives the fourth indication information from the network device, where the fourth indication information indicates whether a first PPW is in an active state, and the first PPW is associated with a first PRS frequency layer in P PRS frequency layers.

That the first PPW is associated with the first PRS frequency layer may be understood as follows: If the first PPW is configured in a first bandwidth part (bandwidth part, BWP) of a first serving cell, the first BWP includes the first PRS frequency layer, and the first BWP and the first PRS frequency layer have a same subcarrier spacing, the first PPW is associated with the first PRS frequency layer.

For example, according to the method 100, the terminal device receives the fourth indication information from the network device, where the fourth indication information indicates whether a second PPW is in an active state, and the second PPW is associated with a second PRS frequency layer in Q PRS frequency layers.

That the second PPW is associated with the second PRS frequency layer may be understood as follows: If the second PPW is configured in a second BWP of a second serving cell, the second BWP includes the second PRS frequency layer, and the second BWP and the second PRS frequency layer have a same subcarrier spacing, the second PPW is associated with the second PRS frequency layer.

620: The terminal device determines a measurement time window of the PRS frequency layer based on the fourth indication information.

For example, according to the method 100, the terminal device determines a first measurement time window of the first PRS frequency layer based on the fourth indication information.

For example, according to the method 100, the terminal device determines a second measurement time window of the second PRS frequency layer based on the fourth indication information.

Based on the foregoing technical solution, the terminal device may determine the measurement time window of the PRS frequency layer based on the fourth indication information, so that measurement behavior of the terminal device can be determined, and it is ensured that the terminal device, the network device, and the LMF have a consistent understanding.

Based on step 620, the terminal device may determine the measurement time window of the PRS frequency layer based on the fourth indication information in the following two possible manners.

In a possible manner, when the fourth indication information indicates that the PPW is in the active state, the terminal device determines that the measurement time window of the PRS frequency layer is the PPW.

For example, when the fourth indication information indicates that the first PPW is in the active state, the terminal device determines that the first measurement time window of the first PRS frequency layer is the first PPW.

For example, when the fourth indication information indicates that the second PPW is in the active state, the terminal device determines that the second measurement time window of the second PRS frequency layer is the second PPW.

In another possible manner, when the fourth indication information indicates that the PPW is in an inactive state, the terminal device determines that the measurement time window of the PRS frequency layer is the MG.

For example, when the fourth indication information indicates that the first PPW is in an inactive state, the terminal device determines that the first measurement time window of the first PRS frequency layer is a first MG.

For example, when the fourth indication information indicates that the second PPW is in an inactive state, the terminal device determines that the second measurement time window of the second PRS frequency layer is a second MG.

It should be understood that the PPW and the MG may coexist when PRS frequency layers associated with the PPW and the MG are different. For example, the first measurement time window of the first PRS frequency layer is the first PPW, and the second measurement time window of the second PRS frequency layer is the second MG. The first PPW and the second MG may coexist.

Optionally, when the PRS frequency layer has no associated PPW, the terminal device determines that the measurement time window of the PRS frequency layer is the MG.

Optionally, when the PPW collides with the MG in time domain, the terminal device does not measure the PRS frequency layer on an instance of the colliding PPW.

A PRS frequency layer associated with the PPW is different from a PRS frequency layer associated with the MG.

For example, if a periodicity of the PPW configured by the network device is 80 ms and a time domain start position is 0, and a periodicity of the MG configured by the network device is 160 ms and a time domain start position is 0, one PPW conflicts with the MG in time domain every 160 ms. In this case, the terminal device does not measure the PRS frequency layer on an instance of the colliding PPW.

For example, according to the method 100, assuming that a measurement time window of each of the Q PRS frequency layers is a PPW, and a measurement time window of each of the P PRS frequency layers is an MG, the terminal device may determine time for measuring each of the Q PRS frequency layers in the PPW in a mode 2, and determine second measurement time based on a maximum value of the time for measuring each of the Q PRS frequency layers, and the terminal device may further determine time for measuring each of the P PRS frequency layers in the MG in a mode 1, and determine first measurement time based on a sum of time for measuring all of the P PRS frequency layers. Based on this, the terminal device may determine third measurement time based on the first measurement time and the second measurement time.

It should be understood that the measurement time window of each of the Q PRS frequency layers is the PPW, in other words, there are Q PPWs of the Q PRS frequency layers, and a same PPW may exist in the Q PPWs, or the Q PPWs may be different from each other. In addition, the measurement time window of each of the P PRS frequency layers is the MG, in other words, there are P MGs of the P PRS frequency layers, and a same MG may exist in the P MGs, or the P MGs may be different from each other.

For example, according to the method 100, assuming that a measurement time window of each of the Q PRS frequency layers is a PPW 2, and a measurement time window of each of the P PRS frequency layers is a PPW 1, the terminal device may determine time for measuring each of the Q PRS frequency layers in the PPW 2 in a mode 2, and determine second measurement time based on a maximum value of the time for measuring each of the Q PRS frequency layers, and the terminal device may further determine time for measuring each of the P PRS frequency layers in the PPW 1 in a mode 1, and determine first measurement time based on a sum of time for measuring all of the P PRS frequency layers. Based on this, the terminal device may determine third measurement time based on the first measurement time and the second measurement time.

It should be understood that the measurement time window of each of the Q PRS frequency layers is the PPW 2, in other words, there are Q PPWs 2 of the Q PRS frequency layers, and a same PPW may exist in the Q PPWs 2, or the Q PPWs 2 may be different from each other. In addition, the measurement time window of each of the P PRS frequency layers is the PPW 1, in other words, there are P PPWs 1 of the P PRS frequency layers, and a same PPW may exist in the P PPWs 1, or the P PPWs 1 may be different from each other.

For example, assuming that a measurement time window of each of M PRS frequency layers is a PPW, and a measurement time window of each of N PRS frequency layers is an MG, the terminal device may determine time for measuring each of the M PRS frequency layers in the PPW in a mode 1, and determine measurement time 1 based on a sum of time for measuring all of the M PRS frequency layers, and the terminal device may further determine time for measuring each of the N PRS frequency layers in the MG in the mode 1, and determine measurement time 2 based on a sum of time for measuring all of the N PRS frequency layers. Based on this, the terminal device may determine measurement time 3 based on a sum of the measurement time 1 and the measurement time 2.

It should be understood that the measurement time window of each of the M PRS frequency layers is the PPW, in other words, there are M PPWs of the M PRS frequency layers, and a same PPW may exist in the M PPWs, or the M PPWs may be different from each other. In addition, the measurement time window of each of the N PRS frequency layers is the MG, in other words, there are N MGs of the N PRS frequency layers, and a same MG may exist in the N MGs, or the N MGs may be different from each other.

It may be understood that the examples in FIG. 1 to FIG. 6 in embodiments of this application are merely intended to help a person skilled in the art understand embodiments of this application, but are not intended to limit embodiments of this application to specific scenarios in the examples. A person skilled in the art can apparently make various equivalent modifications or changes based on the examples shown in FIG. 1 to FIG. 6, and such modifications or changes also fall within the scope of embodiments of this application. For example, "the terminal device reports the capability to the LMF" in FIG. 4 may be replaced with "the terminal device sends the capability of the terminal device to the LMF."

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in this application, "at least one (item)" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

It may be further understood that some information names, such as the first indication information and the second indication information, are involved in embodiments of this application. It should be understood that the names do not limit the protection scope of embodiments of this application.

It may be further understood that, in the foregoing method embodiments, the methods and operations implemented by the terminal device, the network device, or the LMF may alternatively be implemented by a component (for example, a chip or a circuit) of the terminal device, the network device, or the LMF.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

In embodiments provided in this application, the methods provided in embodiments of this application are separately described from perspectives of the network device, the terminal device, the LMF, and interaction among the network device, the terminal device, and the LMF. To implement functions in the methods provided in the foregoing embodiments of this application, the network device, the terminal device, and the LMF may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on specific application and design constraints of the technical solutions.

The communication methods according to embodiments of this application are described in detail with reference to FIG. 1 to FIG. 6. The following describes in detail communication apparatuses provided in embodiments of this application with reference to FIG. 7 to FIG. 9.

FIG. 7 is a block diagram of a communication apparatus according to an embodiment of this application. The apparatus 700 includes a processing unit 720. The processing unit 720 may be configured to implement a corresponding processing function, for example, determining second measurement time.

Optionally, the apparatus 700 may further include a transceiver unit 710. The transceiver unit 710 may be configured to implement a corresponding communication function. The transceiver unit 710 may also be referred to as a communication interface or a communication unit.

Optionally, the apparatus 700 further includes a storage unit. The storage unit may be configured to store instructions and/or data. The processing unit 720 may read the instructions and/or the data in the storage unit, to enable the apparatus to implement actions of the terminal device, the network device, or the LMF in the foregoing method embodiments.

The apparatus 700 may be configured to perform the actions performed by the terminal device, the network device, or the LMF in the foregoing method embodiments. In this case, the apparatus 700 may be the terminal device or a component of the terminal device, may be the network device or a component of the network device, or may be the LMF or a component of the LMF. The transceiver unit 710 is configured to perform operations related to sending and receiving of the terminal device, the network device, or the LMF in the foregoing method embodiments. The processing unit 720 is configured to perform operations related to processing of the terminal device, the network device, or the LMF in the foregoing method embodiments.

In a design, the apparatus 700 is configured to perform actions performed by the terminal device in the foregoing method embodiments.

In a possible implementation, the processing unit 720 is configured to determine time for measuring each of Q PRS frequency layers in a mode 2. The processing unit 720 is further configured to determine second measurement time based on a maximum value of the time for measuring each of the Q PRS frequency layers, where Q is a positive integer.

Optionally, the processing unit 720 is further configured to determine time for measuring each of P PRS frequency layers in a mode 1. The processing unit 720 is further configured to determine first measurement time based on a sum of time for measuring all of the P PRS frequency layers, where P is a positive integer.

Optionally, the processing unit 720 is further configured to determine third measurement time based on the first measurement time and the second measurement time, where the third measurement time is time for measuring P+Q PRS frequency layers.

Optionally, the processing unit 720 is further configured to determine the third measurement time based on the first measurement time, the second measurement time, and a first margin, where the third measurement time is a sum of the first measurement time, the second measurement time, and the first margin.

Optionally, time for measuring a second PRS frequency layer in the Q PRS frequency layers is determined based on first time and/or second time, the first time is sampling time for measuring the second PRS frequency layer, and the second time is measurement time for measuring a last sampling point of the second PRS frequency layer.

Optionally, the second time includes sampling time and processing time.

Optionally, the first time is duration of a PRS resource, the duration of the PRS resource is in a first window, a length of the first window is a difference between a length of a second measurement time window of the second PRS frequency layer and T2, and a start position of the first window is a start point of the length of the second measurement time window, where T2 is a processing time capability of the terminal device for measuring the second PRS frequency layer.

Optionally, the first time is duration of a PRS resource, the duration of the PRS resource is less than or equal to N2, the duration of the PRS resource is in a first window, a length of the first window is a difference between a length of a second measurement time window of the second PRS frequency layer and T2, and a start position of the first window is a start point of the length of the second measurement time window, where N2 is a duration capability of the terminal device for measuring the second PRS frequency layer, and T2 is a processing time capability of the terminal device for measuring the second PRS frequency layer.

Optionally, the first time is a smallest value between duration of a PRS resource and N2, the duration of the PRS resource is in a first window, a length of the first window is a difference between a length of a second measurement time window of the second PRS frequency layer and T2, and a start position of the first window is a start point of the length of the second measurement time window, where N2 is a duration capability of the terminal device for measuring the second PRS frequency layer, and T2 is a processing time capability of the terminal device for measuring the second PRS frequency layer.

Optionally, when all PRS resources of the second PRS frequency layer are in the second measurement time window of the second PRS frequency layer, the second time is the length of the second measurement time window of the second PRS frequency layer.

Optionally, when a PRS resource of the second PRS frequency layer is not in the second measurement time window of the second PRS frequency layer, the second time is an available periodicity of the second PRS frequency layer.

Optionally, the transceiver unit 710 is configured to report a second capability to a location management function LMF, where the second capability is associated with the second PRS frequency layer. The processing unit 720 is configured to determine, based on the second capability, that a measurement mode of the second PRS frequency layer is the mode 2.

Optionally, the second capability is {N2, T2}, where N2 is the duration capability of the terminal device for measuring the second PRS frequency layer, and T2 is the processing time capability of the terminal device for measuring the second PRS frequency layer.

Optionally, the second capability includes {N, T} and {N2, T2}, N and N2 are duration capabilities of the terminal device for measuring the second PRS frequency layer, and T and T2 are processing time capabilities of the terminal device for measuring the second PRS frequency layer. The transceiver unit 710 is configured to receive first indication information from the LMF, where the first indication information indicates that the measurement mode of the second PRS frequency layer is the mode 2.

Optionally, the second capability includes {N, T} and {N2, T2}, N and N2 are duration capabilities of the terminal device for measuring the second PRS frequency layer, and T and T2 are processing time capabilities of the terminal device for measuring the second PRS frequency layer. The transceiver unit 710 is configured to receive second indication information from a network device, where the second indication information indicates the length of the second measurement time window of the second PRS frequency layer. The processing unit 720 is configured to determine, based on a case that the length of the second measurement time window is greater than or equal to a first threshold, that the measurement mode of the second PRS frequency layer is the mode 2.

Optionally, the transceiver unit 710 is configured to report a first capability to a location management function LMF, where the first capability is associated with a first PRS frequency layer. The processing unit 720 is configured to determine, based on the first capability, that a measurement mode of the first PRS frequency layer is a mode 1.

Optionally, the first capability is {N, T}, where N is a duration capability of the terminal device for measuring the first PRS frequency layer, and T is a processing time capability of the terminal device for measuring the first PRS frequency layer.

Optionally, the first capability includes {N, T} and {N2, T2}, N and N2 are duration capabilities of the terminal device for measuring the first PRS frequency layer, and T and T2 are processing time capabilities of the terminal device for measuring the first PRS frequency layer. The transceiver unit 710 is configured to receive first indication information from the LMF, where the first indication information indicates that the measurement mode of the first PRS frequency layer is the mode 1.

Optionally, the first capability includes {N, T} and {N2, T2}, N and N2 are duration capabilities of the terminal device for measuring the first PRS frequency layer, and T and T2 are processing time capabilities of the terminal device for measuring the first PRS frequency layer. The transceiver unit 710 is configured to receive second indication information from a network device, where the second indication information indicates a length of a first measurement time window of the first PRS frequency layer. The processing unit 720 is configured to determine, based on a case that the length of the first measurement time window is less than a first threshold, that the measurement mode of the first PRS frequency layer is the mode 1.

Optionally, the transceiver unit 710 is configured to send third indication information to the network device, where the third indication information indicates that the length of the second measurement time window of the second PRS frequency layer is greater than or equal to a second threshold; or the third indication information indicates a first recommended value, and the first recommended value is time other than the duration of the PRS resource in the length of the second measurement time window of the second PRS frequency layer.

Optionally, the transceiver unit 710 is configured to receive fourth indication information from the network device, where the fourth indication information indicates whether a second PPW is in an active state, and the second PPW is associated with the second PRS frequency layer in the Q PRS frequency layers. The processing unit 720 is configured to determine the second measurement time window of the second PRS frequency layer based on the fourth indication information.

The second PRS frequency layer may be configured by the LMF for the terminal device, and the second measurement time window (for example, the second PPW or a second MG) may be configured by the network device for the terminal device.

Optionally, when the fourth indication information indicates that the second PPW is in the active state, the processing unit 720 is configured to determine that the second measurement time window is the second PPW; or when the fourth indication information indicates that the second PPW is in an inactive state, the processing unit 720 is configured to determine that the second measurement time window is the second MG.

Optionally, the transceiver unit 710 is configured to receive fourth indication information from the network device, where the fourth indication information indicates whether a first positioning reference signal processing window PPW is in an active state, and the first PPW is associated with the first PRS frequency layer in the P PRS frequency layers. The processing unit 720 is configured to determine the first measurement time window of the first PRS frequency layer based on the fourth indication information.

The first PRS frequency layer may be configured by the LMF for the terminal device, and the first measurement time window (for example, the first PPW or a first MG) may be configured by the network device for the terminal device.

Optionally, when the fourth indication information indicates that the first PPW is in the active state, the processing unit 720 is configured to determine that the first measurement time window is the first PPW; or when the fourth indication information indicates that the first PPW is in an inactive state, the processing unit 720 is configured to determine that the first measurement time window is the first measurement gap MG.

In another possible implementation, the processing unit 720 is configured to determine first time, where the first time is sampling time for measuring a PRS frequency layer in a mode 2.

Optionally, the first time is duration of a PRS resource, the duration of the PRS resource is in a first window, a length of the first window is a difference between a length of a measurement time window of the PRS frequency layer and T2, and a start position of the first window is a start point of the length of the measurement time window, where T2 is a processing time capability of the terminal device for measuring the PRS frequency layer.

Optionally, the first time is duration of a PRS resource, the duration of the PRS resource is less than or equal to N2, the duration of the PRS resource is in a first window, a length of the first window is a difference between a length of a measurement time window of the PRS frequency layer and T2, and a start position of the first window is a start point of the length of the measurement time window, where N2 is a duration capability of the terminal device for measuring the PRS frequency layer, and T2 is a processing time capability of the terminal device for measuring the PRS frequency layer.

Optionally, the first time is a smallest value between duration of a PRS resource and N2, the duration of the PRS resource is in a first window, a length of the first window is a difference between a length of a measurement time window of the PRS frequency layer and T2, and a start position of the first window is a start point of the length of the measurement time window, where N2 is a duration capability of the terminal device for measuring the PRS frequency layer, and T2 is a processing time capability of the terminal device for measuring the PRS frequency layer.

In another possible implementation, the transceiver unit 710 is configured to report a capability to a location management function LMF, where the capability is associated with a positioning reference signal PRS frequency layer. The processing unit 720 is configured to determine a measurement mode of the PRS frequency layer based on the capability.

Optionally, the capability includes at least one of the following: {N, T} or {N2, T2}, where N and N2 are duration capabilities of the terminal device for measuring the PRS frequency layer, and T and T2 are processing time capabilities of the terminal device for measuring the PRS frequency layer.

Optionally, when the capability is {N, T}, the processing unit 720 is configured to determine that the measurement mode of the PRS frequency layer is a mode 1; or when the capability is {N2, T2}, the processing unit 720 is configured to determine that the measurement mode of the PRS frequency layer is a mode 2.

Optionally, the capability is {N, T} and {N2, T2}. The transceiver unit 710 is configured to receive first indication information from the LMF, where the first indication information indicates that the measurement mode of the PRS frequency layer is a mode 1 or a mode 2. The processing unit 720 is configured to determine, based on the first indication information, that the measurement mode of the PRS frequency layer is the mode 1 or the mode 2.

Optionally, the capability is {N, T} and {N2, T2}. The transceiver unit 710 is configured to receive second indication information from a network device, where the second indication information indicates a length of a measurement time window of the PRS frequency layer. The processing unit 720 is configured to determine, based on the second indication information, that the measurement mode of the PRS frequency layer is a mode 1 or a mode 2.

Optionally, when the length of the measurement time window of the PRS frequency layer is greater than or equal to a first threshold, the processing unit 720 is configured to determine that the measurement mode of the PRS frequency layer is the mode 2; or when the length of the measurement time window of the PRS frequency layer is less than a first threshold, the processing unit 720 is configured to determine that the measurement mode of the PRS frequency layer is the mode 1.

Optionally, the transceiver unit 710 is configured to send third indication information to the network device, where the third indication information indicates that the length of the measurement time window of the PRS frequency layer is greater than or equal to a second threshold; or the third indication information indicates a first recommended value, and the first recommended value is time other than duration of a PRS resource in the length of the measurement time window of the PRS frequency layer.

In another possible implementation, the transceiver unit 710 is configured to receive fourth indication information from a network device, where the fourth indication information indicates whether a positioning reference signal processing window PPW is in an active state, and the PPW is associated with a positioning reference signal PRS frequency layer. The processing unit 720 is configured to determine a measurement time window of the PRS frequency layer based on the fourth indication information.

The PRS frequency layer may be configured by an LMF for a terminal device, and the measurement time window (for example, the PPW or an MG) may be configured by the network device for the terminal device.

Optionally, when the fourth indication information indicates that the PPW is in the active state, the processing unit 720 is configured to determine that the measurement time window of the PRS frequency layer is the PPW; or when the fourth indication information indicates that the PPW is in an inactive state, the processing unit 720 is configured to determine that the measurement time window of the PRS frequency layer is the measurement gap MG.

In another possible implementation, the transceiver unit 710 is configured to send third indication information to a network device, where the third indication information indicates that a length of a measurement time window of a PRS frequency layer is greater than or equal to a second threshold; or the third indication information indicates a first recommended value, and the first recommended value is time other than duration of a PRS resource in a length of a measurement time window of a PRS frequency layer.

The apparatus 700 may implement corresponding steps or procedures performed by the terminal device in the method embodiments in embodiments of this application. The apparatus 700 may include units configured to perform the method performed by the terminal device in any one of the embodiments shown in FIG. 1 to FIG. 6.

In another design, the apparatus 700 is configured to perform actions performed by the network device in the foregoing method embodiments.

In a possible implementation, the transceiver unit 710 is configured to receive third indication information from a first device, where the third indication information indicates that a length of a measurement time window of a PRS frequency layer is greater than or equal to a second threshold; or the third indication information indicates a first recommended value, and the first recommended value is time other than duration of a PRS resource in a length of a measurement time window of a PRS frequency layer. The processing unit 720 is configured to determine the length of the measurement time window of the PRS frequency layer based on the third indication information.

The first device may be a terminal device, or may be a location management function LMF.

Optionally, when the third indication information indicates that the length of the measurement time window of the PRS frequency layer is greater than or equal to the second threshold, the processing unit 720 is configured to determine that the length of the measurement time window of the PRS frequency layer is greater than or equal to the second threshold; or when the third indication information indicates the first recommended value, the processing unit 720 is configured to determine that the length of the measurement time window of the PRS frequency layer is a sum of the first recommended value and the duration of the PRS resource.

Optionally, the transceiver unit 710 is configured to send second indication information to a terminal device, where the second indication information indicates the length of the measurement time window of the PRS frequency layer.

The apparatus 700 may implement corresponding steps or procedures performed by the network device in the method embodiments in embodiments of this application. The apparatus 700 may include units configured to perform the method performed by the network device in any one of the embodiments shown in FIG. 1 to FIG. 6.

In another design, the apparatus 700 is configured to perform actions performed by the LMF in the foregoing method embodiments.

In a possible implementation, the transceiver unit 710 is configured to send third indication information to a network device, where the third indication information indicates that a length of a measurement time window of a PRS frequency layer is greater than or equal to a second threshold; or the third indication information indicates a first recommended value, and the first recommended value is time other than duration of a PRS resource in a length of a measurement time window of a PRS frequency layer.

In another possible implementation, the transceiver unit 710 is configured to receive a capability reported by a terminal device, where the reported capability is {N, T} and {N2, T2}, and the reported capability is associated with a positioning reference signal PRS frequency layer, where N and N2 are duration capabilities of the terminal device for measuring the PRS frequency layer, and T and T2 are processing time capabilities of the terminal device for measuring the PRS frequency layer. The transceiver unit 710 is configured to send first indication information to the terminal device based on the reported capability, where the first indication information indicates that a measurement mode of the PRS frequency layer is a mode 1 or a mode 2.

The apparatus 700 may implement corresponding steps or procedures performed by the LMF in the method embodiments in embodiments of this application. The apparatus 700 may include units configured to perform the method performed by the LMF in any one of the embodiments shown in FIG. 1 to FIG. 6.

It should be understood that specific processes of performing the foregoing corresponding steps by the units are described in detail in the foregoing method embodiments. For brevity, details are not described herein again.

It should be further understood that the apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the terminal device, the network device, or the LMF in the foregoing embodiments and may be configured to perform procedures and/or steps corresponding to the terminal device, the network device, or the LMF in the foregoing method embodiments. To avoid repetition, details are not described herein again.

The apparatus 700 in the foregoing solutions has functions of implementing corresponding steps performed by the terminal device, the network device, or the LMF in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 710 may alternatively be a transceiver circuit (for example, may include a receive circuit and a sending circuit), and the processing unit may be a processing circuit.

It should be noted that the apparatus in FIG. 7 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

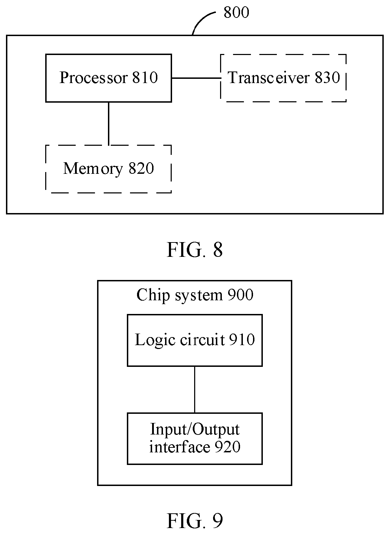

As shown in FIG. 8, an embodiment of this application provides another communication apparatus 800. The apparatus 800 includes a processor 810. The processor 810 is coupled to a memory 820. The memory 820 is configured to store a computer program or instructions and/or data. The processor 810 is configured to: execute the computer program or instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 8, the apparatus 800 further includes a transceiver 830. The transceiver 830 is configured to receive and/or send a signal. For example, the processor 810 is configured to control the transceiver 830 to receive and/or send the signal.

In a solution, the apparatus 800 is configured to implement operations performed by the terminal device, the network device, or the LMF in the foregoing method embodiments.

For example, the processor 810 is configured to execute the computer program or the instructions stored in the memory 820, to implement related operations of the terminal device in the foregoing method embodiments, for example, the method performed by the terminal device in any one of the embodiments shown in FIG. 1 to FIG. 6.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate or the transistor logic device, or the discrete hardware component, the memory (storage module) may be integrated into the processor.

It should be further noted that the memory described in this specification is intended to include, but is not limited to, these memories and any other appropriate type of memory.

As shown in FIG. 9, an embodiment of this application provides a chip system 900. The chip system 900 (or may also be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the terminal device, the network device, or the LMF in the foregoing method embodiments.

For example, the logic circuit 910 is configured to implement processing related operations performed by the terminal device in the foregoing method embodiments, for example, a processing related operation performed by the terminal device in any one of the embodiments shown in FIG. 1 to FIG. 6. The input/output interface 920 is configured to implement sending and/or receiving related operations performed by the terminal device in the foregoing method embodiments, for example, a sending and/or receiving related operation performed by the terminal device in any one of the embodiments shown in FIG. 1 to FIG. 6.

An embodiment of this application further provides a computer-readable storage medium. The computer-readable storage medium stores computer instructions used to implement the method performed by the terminal device, the network device, or the LMF in the foregoing method embodiments.

For example, when a computer program is executed by a computer, the computer is enabled to implement the method performed by the terminal device in the foregoing method embodiments.

An embodiment of this application further provides a computer program product, including instructions. When the instructions are executed by a computer, the method performed by the terminal device, the network device, or the LMF in the foregoing method embodiments is implemented.

For descriptions and beneficial effect of related content of any one of the apparatuses provided above, refer to a corresponding method embodiment provided above. Details are not described herein again.

In the several embodiments provided in this application, it should be understood that the disclosed apparatus and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between apparatuses or units may be implemented in an electrical form, a mechanical form, or another form.

All or some of the foregoing embodiments may be implemented by software, hardware, firmware, or any combination thereof. When the software is used to implement embodiments, all or some embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1.    A communication method, comprising:

   determining, by a terminal device, time for measuring each of Q PRS frequency layers in a mode 2; and
   determining, by the terminal device, second measurement time based on a maximum value of the time for measuring each of the Q PRS frequency layers, wherein Q is a positive integer.

2.    The method according to claim 1, wherein the method further comprises:

determining, by the terminal device, time for measuring each of P PRS frequency layers in a mode 1; and determining, by the terminal device, first measurement time based on a sum of time for measuring all of the P PRS frequency layers, wherein P is a positive integer.

3. The method according to claim 2, wherein the method further comprises:
determining, by the terminal device, third measurement time based on the first measurement time and the second measurement time, wherein the third measurement time is time for measuring P+Q PRS frequency layers.

4. The method according to claim 3, wherein the determining, by the terminal device, third measurement time based on the first measurement time and the second measurement time comprises:
determining, by the terminal device, the third measurement time based on the first measurement time, the second measurement time, and a first margin, wherein the third measurement time is a sum of the first measurement time, the second measurement time, and the first margin.

5. The method according to any one of claims 1 to 4, wherein time for measuring a second PRS frequency layer in the Q PRS frequency layers is determined based on first time and/or second time, the first time is sampling time for measuring the second PRS frequency layer, and the second time is measurement time for measuring a last sampling point of the second PRS frequency layer.

6. The method according to claim 5, wherein the first time is duration of a PRS resource, the duration of the PRS resource is in a first window, a length of the first window is a difference between a length of a second measurement time window of the second PRS frequency layer and T2, and a start position of the first window is a start point of the length of the second measurement time window, wherein T2 is a processing time capability of the terminal device for measuring the second PRS frequency layer.

7. The method according to claim 5, wherein the first time is duration of a PRS resource, the duration of the PRS resource is less than or equal to N2, the duration of the PRS resource is in a first window, a length of the first window is a difference between a length of a second measurement time window of the second PRS frequency layer and T2, and a start position of the first window is a start point of the length of the second measurement time window, wherein N2 is a duration capability of the terminal device for measuring the second PRS frequency layer, and T2 is a processing time capability of the terminal device for measuring the second PRS frequency layer.

8. The method according to any one of claims 5 to 7, wherein when all PRS resources of the second PRS frequency layer are in the second measurement time window of the second PRS frequency layer, the second time is the length of the second measurement time window of the second PRS frequency layer.

9. The method according to any one of claims 5 to 7, wherein when a PRS resource of the second PRS frequency layer is not in the second measurement time window of the second PRS frequency layer, the second time is an available periodicity of the second PRS frequency layer.

10. The method according to any one of claims 1 to 9, wherein the method further comprises:

reporting, by the terminal device, a second capability to a location management function LMF, wherein the second capability is associated with the second PRS frequency layer; and
determining, by the terminal device based on the second capability, that a measurement mode of the second PRS frequency layer is the mode 2.

11. The method according to claim 10, wherein the second capability is {N2, T2}, wherein N2 is the duration capability of the terminal device for measuring the second PRS frequency layer, and T2 is the processing time capability of the terminal device for measuring the second PRS frequency layer.

12. The method according to claim 10, wherein the second capability comprises {N, T} and {N2, T2}, N and N2 are duration capabilities of the terminal device for measuring the second PRS frequency layer, and T and T2 are processing time capabilities of the terminal device for measuring the second PRS frequency layer; and
the determining, by the terminal device based on the second capability, that a measurement mode of the second PRS frequency layer is the mode 2 comprises:
receiving, by the terminal device, first indication information from the LMF, wherein the first indication information indicates that the measurement mode of the second PRS frequency layer is the mode 2.

13. The method according to claim 10, wherein the second capability comprises {N, T} and {N2, T2}, N and N2 are duration capabilities of the terminal device for measuring the second PRS frequency layer, and T and T2 are processing time capabilities of the terminal device for measuring the second PRS frequency layer; and
the determining, by the terminal device based on the second capability, that a measurement mode of the second PRS frequency layer is the mode 2 comprises:

receiving, by the terminal device, second indication information from a network device, wherein the second indication information indicates the length of the second measurement time window of the second PRS frequency layer; and
determining, by the terminal device based on a case that the length of the second measurement time window is greater than or equal to a first threshold, that the measurement mode of the second PRS frequency layer is the mode 2.

14. The method according to any one of claims 2 to 4, wherein the method further comprises:

reporting, by the terminal device, a first capability to a location management function LMF, wherein the first capability is associated with a first PRS frequency layer; and
determining, by the terminal device based on the first capability, that a measurement mode of the first PRS frequency layer is a mode 1.

15. The method according to claim 14, wherein the first capability is {N, T}, wherein N is a duration capability of the terminal device for measuring the first PRS frequency layer, and T is a processing time capability of the terminal device for measuring the first PRS frequency layer.

16. The method according to claim 14, wherein the first capability comprises {N, T} and {N2, T2}, N and N2 are duration capabilities of the terminal device for measuring the first PRS frequency layer, and T and T2 are processing time capabilities of the terminal device for measuring the first PRS frequency layer; and
the determining, by the terminal device based on the first capability, that a measurement mode of the first PRS frequency layer is a mode 1 comprises:
receiving, by the terminal device, first indication information from the LMF, wherein the first indication information indicates that the measurement mode of the first PRS frequency layer is the mode 1.

17. The method according to claim 14, wherein the first capability comprises {N, T} and {N2, T2}, N and N2 are duration capabilities of the terminal device for measuring the first PRS frequency layer, and T and T2 are processing time capabilities of the terminal device for measuring the first PRS frequency layer; and
the determining, by the terminal device based on the first capability, that a measurement mode of the first PRS frequency layer is a mode 1 comprises:

receiving, by the terminal device, second indication information from a network device, wherein the second indication information indicates a length of a first measurement time window of the first PRS frequency layer; and
determining, by the terminal device based on a case that the length of the first measurement time window is less than a first threshold, that the measurement mode of the first PRS frequency layer is the mode 1.

18. The method according to any one of claims 1 to 17, wherein the method further comprises:
sending, by the terminal device, third indication information to the network device, wherein the third indication information indicates that the length of the second measurement time window of the second PRS frequency layer is greater than or equal to a second threshold; or the third indication information indicates a first recommended value, and the first recommended value is time other than the duration of the PRS resource in the length of the second measurement time window of the second PRS frequency layer.

19. The method according to any one of claims 1 to 18, wherein the method further comprises:

receiving, by the terminal device, fourth indication information from the network device, wherein the fourth indication information indicates whether a second PPW is in an active state, and the second PPW is associated with the second PRS frequency layer in the Q PRS frequency layers; and
determining, by the terminal device, the second measurement time window of the second PRS frequency layer based on the fourth indication information.

20. The method according to claim 19, wherein the determining, by the terminal device, the second measurement time window of the second PRS frequency layer based on the fourth indication information comprises:
when the fourth indication information indicates that the second PPW is in the active state, determining, by the terminal device, that the second measurement time window is the second PPW; or when the fourth indication information indicates that the second PPW is in an inactive state, determining, by the terminal device, that the second measurement time window is a second MG.

21. The method according to any one of claims 2 to 4 and claims 14 to 17, wherein the method further comprises:

receiving, by the terminal device, fourth indication information from the network device, wherein the fourth indication information indicates whether a first positioning reference signal processing window PPW is in an active state, and the first PPW is associated with the first PRS frequency layer in the P PRS frequency layers; and determining, by the terminal device, the first measurement time window of the first PRS frequency layer based on the fourth indication information.

22. The method according to claim 21, wherein the determining, by the terminal device, the first measurement time window of the first PRS frequency layer based on the fourth indication information comprises:
when the fourth indication information indicates that the first PPW is in the active state, determining, by the terminal device, that the first measurement time window is the first PPW; or when the fourth indication information indicates that the first PPW is in an inactive state, determining, by the terminal device, that the first measurement time window is a first measurement gap MG.

23. A communication method, comprising:

reporting, by a terminal device, a capability to a location management function LMF, wherein the capability is associated with a positioning reference signal PRS frequency layer; and determining, by the terminal device, a measurement mode of the PRS frequency layer based on the capability.

24. The method according to claim 23, wherein the capability comprises at least one of the following: {N, T} or {N2, T2}, wherein N and N2 are duration capabilities of the terminal device for measuring the PRS frequency layer, and T and T2 are processing time capabilities of the terminal device for measuring the PRS frequency layer.

25. The method according to claim 24, wherein the determining, by the terminal device, a measurement mode of the PRS frequency layer based on the capability comprises:

when the capability is {N, T}, determining, by the terminal device, that the measurement mode of the PRS frequency layer is a mode 1; or
when the capability is {N2, T2}, determining, by the terminal device, that the measurement mode of the PRS frequency layer is a mode 2.

26. The method according to claim 24, wherein the capability is {N, T} and {N2, T2}; and
the determining, by the terminal device, a measurement mode of the PRS frequency layer based on the capability comprises:

receiving, by the terminal device, first indication information from the LMF, wherein the first indication information indicates that the measurement mode of the PRS frequency layer is a mode 1 or a mode 2; and determining, by the terminal device based on the first indication information, that the measurement mode of the PRS frequency layer is the mode 1 or the mode 2.

27. The method according to claim 24, wherein the capability is {N, T} and {N2, T2}, and the determining, by the terminal device, a measurement mode of the PRS frequency layer based on the capability comprises:

receiving, by the terminal device, second indication information from a network device, wherein the second indication information indicates a length of a measurement time window of the PRS frequency layer; and determining, by the terminal device based on the second indication information, that the measurement mode of the PRS frequency layer is a mode 1 or a mode 2.

28. The method according to claim 27, wherein the determining, by the terminal device based on the second indication information, that the measurement mode of the PRS frequency layer is a mode 1 or a mode 2 comprises:

> when the length of the measurement time window of the PRS frequency layer is greater than or equal to a first threshold, determining, by the terminal device, that the measurement mode of the PRS frequency layer is the mode 2; or
> when the length of the measurement time window of the PRS frequency layer is less than a first threshold, determining, by the terminal device, that the measurement mode of the PRS frequency layer is the mode 1.

29. The method according to any one of claims 23 to 28, wherein the method further comprises:
sending, by the terminal device, third indication information to the network device, wherein the third indication information indicates that the length of the measurement time window of the PRS frequency layer is greater than or equal to a second threshold; or the third indication information indicates a first recommended value, and the first recommended value is time other than duration of a PRS resource in the length of the measurement time window of the PRS frequency layer.

30. A communication method, comprising:

> receiving, by a terminal device, fourth indication information from a network device, wherein the fourth indication information indicates whether a positioning reference signal processing window PPW is in an active state, and the PPW is associated with a positioning reference signal PRS frequency layer; and
> determining, by the terminal device, a measurement time window of the PRS frequency layer based on the fourth indication information.

31. The method according to claim 30, wherein the determining, by the terminal device, a measurement time window of the PRS frequency layer based on the fourth indication information comprises:

> when the fourth indication information indicates that the PPW is in the active state, determining, by the terminal device, that the measurement time window of the PRS frequency layer is the PPW; or
> when the fourth indication information indicates that the PPW is in an inactive state, determining, by the terminal device, that the measurement time window of the PRS frequency layer is a measurement gap MG.

32. A communication method, comprising:
sending, by a first device, third indication information to a network device, wherein the third indication information indicates that a length of a measurement time window of a PRS frequency layer is greater than or equal to a second threshold; or the third indication information indicates a first recommended value, and the first recommended value is time other than duration of a PRS resource in a length of a measurement time window of a PRS frequency layer.

33. A communication method, comprising:

> receiving, by a network device, third indication information from a first device, wherein the third indication information indicates that a length of a measurement time window of a PRS frequency layer is greater than or equal to a second threshold; or the third indication information indicates a first recommended value, and the first recommended value is time other than duration of a PRS resource in a length of a measurement time window of a PRS frequency layer; and
> determining, by the network device, the length of the measurement time window of the PRS frequency layer based on the third indication information.

34. The method according to claim 33, wherein the determining, by the network device, the length of the measurement time window of the PRS frequency layer based on the third indication information comprises:

> when the third indication information indicates that the length of the measurement time window of the PRS frequency layer is greater than or equal to the second threshold, determining, by the network device, that the length of the measurement time window of the PRS frequency layer is greater than or equal to the second threshold; or
> when the third indication information indicates the first recommended value, determining, by the network device, that the length of the measurement time window of the PRS frequency layer is a sum of the first recommended value and the duration of the PRS resource.

35. The method according to claim 33 or 34, wherein the method further comprises:
sending, by the network device, second indication information to a terminal device, wherein the second indication information indicates the length of the measurement time window of the PRS frequency layer.

36. A communication method, comprising:

receiving, by a location management function LMF, a capability reported by a terminal device, wherein the reported capability is {N, T} and {N2, T2}, and the reported capability is associated with a positioning reference signal PRS frequency layer, wherein N and N2 are duration capabilities of the terminal device for measuring the PRS frequency layer, and T and T2 are processing time capabilities of the terminal device for measuring the PRS frequency layer; and
sending, by the LMF, first indication information to the terminal device based on the reported capability, wherein the first indication information indicates that a measurement mode of the PRS frequency layer is a mode 1 or a mode 2.

37. A communication apparatus, comprising:
a processor, configured to execute a computer program stored in a memory, to enable the apparatus to perform the method according to any one of claims 1 to 22, enable the apparatus to perform the method according to any one of claims 23 to 29, enable the apparatus to perform the method according to claim 30 or 31, enable the apparatus to perform the method according to claim 32, enable the apparatus to perform the method according to any one of claims 33 to 35, or enable the apparatus to perform the method according to claim 36.

38. The apparatus according to claim 37, wherein the apparatus further comprises the memory.

39. A computer-readable storage medium, wherein the computer-readable storage medium stores a computer program; and when the computer program is run on a computer, the computer is enabled to perform the method according to any one of claims 1 to 22, the computer is enabled to perform the method according to any one of claims 23 to 29, the computer is enabled to perform the method according to claim 30 or 31, the computer is enabled to perform the method according to claim 32, the computer is enabled to perform the method according to any one of claims 33 to 35, or the computer is enabled to perform the method according to claim 36.

40. A computer program product, wherein the computer program product comprises instructions for performing the method according to any one of claims 1 to 22, the computer program product comprises instructions for performing the method according to any one of claims 23 to 29, the computer program product comprises instructions for performing the method according to claim 30 or 31, the computer program product comprises instructions for performing the method according to claim 32, the computer program product comprises instructions for performing the method according to any one of claims 33 to 35, or the computer program product comprises instructions for performing the method according to claim 36.

100

A terminal device determines time for measuring each of Q PRS frequency layers in a mode 2 ⟋ 110

The terminal device determines second measurement time based on a maximum value of the time for measuring each of the Q PRS frequency layers ⟋ 120

FIG. 1

|← Length of a first window →|← T2 →|

|← Length of a second measurement time window →|

FIG. 2

|← N2 →|← T2 →|

... ...

|← Length of a second measurement time window →|

FIG. 3

400

A terminal device reports a capability to an LMF, where the capability is associated with a PRS frequency layer ⟋ 410

The terminal device determines a measurement mode of the PRS frequency layer based on the capability reported to the LMF ⟋ 420

FIG. 4

500

A network device receives third indication information from a first device, where the third indication information indicates that a length of a measurement time window of a PRS frequency layer is greater than or equal to a second threshold when the length of the measurement time window of the PRS frequency layer is associated with a mode 2; or the third indication information indicates a first recommended value, and the first recommended value is time other than duration of a PRS resource in a length of a measurement time window of a PRS frequency layer 510

The network device determines the length of the measurement time window of the PRS frequency layer based on the third indication information 520

FIG. 5

600

A terminal device receives fourth indication information from a network device, where the fourth indication information indicates whether a PPW is in an active state, and the PPW is associated with a PRS frequency layer 610

The terminal device determines a measurement time window of the PRS frequency layer based on the fourth indication information 620

FIG. 6

700

Transceiver unit 710

Processing unit 720

FIG. 7

800

```
┌──────────────────────────────────────────────────────┐
│                                                        │
│   ┌─────────────────────┐     ┌ ─ ─ ─ ─ ─ ─ ─ ─ ┐      │
│   │                     │       Transceiver 830 |      │
│   │   Processor 810     ├─────┤                        │
│   │                     │     └ ─ ─ ─ ─ ─ ─ ─ ─ ┘      │
│   └──────────┬──────────┘                              │
│              │                                         │
│   ┌ ─ ─ ─ ─ ─┴─ ─ ─ ─ ─ ┐                              │
│      Memory 820    |                                   │
│   │                                                    │
│   └ ─ ─ ─ ─ ─ ─ ─ ─ ─ ─ ┘                              │
│                                                        │
└──────────────────────────────────────────────────────┘
```

FIG. 8

```
┌────────────────────────────────┐
│   Chip system 900              │
│   ┌────────────────────────┐   │
│   │                        │   │
│   │   Logic circuit 910    │   │
│   │                        │   │
│   └───────────┬────────────┘   │
│               │                │
│   ┌───────────┴────────────┐   │
│   │   Input/Output         │   │
│   │   interface 920        │   │
│   └────────────────────────┘   │
│                                │
└────────────────────────────────┘
```

FIG. 9

## INTERNATIONAL SEARCH REPORT

| International application No. |
| --- |
| **PCT/CN2023/105157** |

### A. CLASSIFICATION OF SUBJECT MATTER

H04W64/00(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, VEN: 终端 频率层 测量 时间 窗口 长度 能力 定位管理功能 LMF PRS measure time window ability UE

### C. DOCUMENTS CONSIDERED TO BE RELEVANT

| Category* | Citation of document, with indication, where appropriate, of the relevant passages | Relevant to claim No. |
| --- | --- | --- |
| X | WO 2022126455 A1 (OPPO GUANGDONG MOBILE TELECOMMUNICATIONS CORP., LTD.) 23 June 2022 (2022-06-23) description, paragraphs 47-207 | 1-9, 18-22, 37-40 |
| X | CN 114762402 A (HUAWEI TECHNOLOGIES CO., LTD.) 15 July 2022 (2022-07-15) description, paragraphs 76-238 | 30-31, 37-40 |
| A | WO 2022147805 A1 (OPPO GUANGDONG MOBILE TELECOMMUNICATIONS CORP., LTD.) 14 July 2022 (2022-07-14) description, paragraphs 38-216 | 1-40 |
| A | CN 113709656 A (HUAWEI TECHNOLOGIES CO., LTD.) 26 November 2021 (2021-11-26) entire document | 1-40 |
| A | CN 114503742 A (QUALCOMM INC.) 13 May 2022 (2022-05-13) entire document | 1-40 |
| A | CN 114567928 A (CHENGDU HUAWEI TECHNOLOGIES CO., LTD.) 31 May 2022 (2022-05-31) entire document | 1-40 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 September 2023** | **08 October 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/105157** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 114666890 A (VIVO COMMUNICATION TECHNOLOGY CO., LTD.) 24 June 2022 (2022-06-24)<br>entire document | 1-40 |
| A | CN 114374987 A (VIVO COMMUNICATION TECHNOLOGY CO., LTD.) 19 April 2022 (2022-04-19)<br>entire document | 1-40 |

Form PCT/ISA/210 (second sheet) (July 2022)

## INTERNATIONAL SEARCH REPORT
### Information on patent family members

International application No.

**PCT/CN2023/105157**

| Patent document cited in search report | | | Publication date (day/month/year) | Patent family member(s) | | | Publication date (day/month/year) |
|---|---|---|---|---|---|---|---|
| WO | 2022126455 | A1 | 23 June 2022 | None | | | |
| CN | 114762402 | A | 15 July 2022 | WO | 2021120023 | A1 | 24 June 2021 |
| WO | 2022147805 | A1 | 14 July 2022 | None | | | |
| CN | 113709656 | A | 26 November 2021 | WO | 2021227931 | A1 | 18 November 2021 |
| | | | | EP | 4132017 | A1 | 08 February 2023 |
| | | | | US | 2023079536 | A1 | 16 March 2023 |
| | | | | JP | 2023524162 | W | 08 June 2023 |
| CN | 114503742 | A | 13 May 2022 | WO | 2021071570 | A1 | 15 April 2021 |
| | | | | EP | 4042767 | A1 | 17 August 2022 |
| | | | | US | 2021112541 | A1 | 15 April 2021 |
| | | | | US | 11395300 | B2 | 19 July 2022 |
| | | | | TW | 202116078 | A | 16 April 2021 |
| CN | 114567928 | A | 31 May 2022 | WO | 2020164512 | A1 | 20 August 2020 |
| | | | | EP | 3923643 | A1 | 15 December 2021 |
| | | | | US | 2021373148 | A1 | 02 December 2021 |
| CN | 114666890 | A | 24 June 2022 | WO | 2022135477 | A1 | 30 June 2022 |
| CN | 114374987 | A | 19 April 2022 | WO | 2022078445 | A1 | 21 April 2022 |

Form PCT/ISA/210 (patent family annex) (July 2022)

**REFERENCES CITED IN THE DESCRIPTION**

**Patent documents cited in the description**

- CN 202210948292